# EUROPEAN PATENT APPLICATION

(11) **EP 3 179 537 A1**
(43) Date of publication of application: **14.06.2017**
(21) Application number: 14899163.1
(22) Date of filing: 06.08.2014
(51) Int. Cl.: H01M 2/30, H01M 2/20

(54) **RECTANGULAR SECONDARY BATTERY**

(71) Applicant: Hitachi Automotive Systems, Ltd., Hitachinaka-shi, Ibaraki 312-8503 (JP)
(72) Inventor: MATSUMOTO Sho, Hitachinaka-shi Ibaraki 312-8503 (JP); KOGUCHI Hayato, Hitachinaka-shi Ibaraki 312-8503 (JP)
(74) Representative: MERH-IP Matias Erny Reichl Hoffmann Patentanwälte PartG mbB
(86) International application number: PCT/JP2014/070691
(87) International publication number: WO 2016/020996

(57) **Abstract**

A prismatic secondary battery according to the present invention has a problem of providing a highly reliable the prismatic secondary battery by securing both mechanical strength and electrical characteristics between a metal body to which a bus bar of an external terminal is welded and a connection terminal which is joined with the metal body.

In a prismatic secondary battery (100A) of the present invention to solve the above-described problem, external terminals (141 and 151) of a positive electrode and a negative electrode are disposed on one surface of a prismatic battery container (101) and a flat wound group is housed in the battery container. One external terminal (151) has a connection terminal (153), which passes through the battery container and is electrically connected to the flat wound group (170) and a metal body (152) which is joined with the connection terminal, and joints between the connection terminal and the metal body include a mechanical joint and a metallurgical joint.

## Description

### Technical Field

The present invention relates to a prismatic secondary battery, and, for example, a prismatic secondary battery which is mounted to a vehicle or the like.

### Background Art

Conventionally, secondary batteries with high capacity have been developed as, for example, a power source for hybrid electric cars or pure electric cars. Among such secondary batteries, particularly a prismatic lithium ion secondary battery has been focused as a secondary battery with high energy density.

The prismatic lithium ion secondary battery us manufactured by, for example, electrically connect a flat electric power storage element, obtained by winding a positive electrode foil coated with a positive electrode active material, a negative electrode foil coated with a negative electrode active material, and a separator to insulate the positive electrode foil and the negative electrode foil from each other in a superimposed manner, to a positive electrode external terminal and a negative electrode external terminal provided in a battery lid, housing the electric power storage element in a battery can, sealing an opening portion of the battery can using the battery lid by welding, injecting an electrolyte from a liquid inlet provided in the battery lid, inserting an injection stopper into the liquid inlet, and performing laser welding to weld and seal the battery.

Further, an assembled battery, in which a plurality of secondary batteries are connected in series, is manufactured by arranging a plurality of the above-described prismatic lithium ion secondary batteries, welding a bus bar to an external terminal of each of the batteries such that the neighboring batteries are connected to each other via the bus bar.

Meanwhile, when materials forming the positive electrode external terminal and the negative electrode external terminal of the secondary battery are different from each other, for example, when the positive electrode external terminal is made of aluminum and the negative electrode external terminal is made of copper, it is difficult to secure the welding strength between the positive electrode external terminal and the bus bar if the bus bar made of copper is used, and further, it is difficult to secure the welding strength between the negative electrode external terminal and the bus bar if the bus bar made of aluminum is used, which has been well-known.

With respect to such a problem, PTL 1 discloses an external terminal joined with a clad plate in which the clad plate of aluminum and nickel is used, a bus bar and a clad plate are welded between aluminum and nickel, and a positive electrode external terminal or a negative electrode external terminal and the clad plate are welded among aluminum, nickel or copper, and nickel.

### Citation List

### Patent Literature

PTL 1: WO 2012/169055

### Summary of Invention

### Technical Problem

However, the external terminal and the clad plate are superimposed on each other, and a side surface thereof is welded in the external terminal disclosed in PTL 1, and mechanical strength and electrical characteristics are obtained only in a welding portion thereof which has a small volume, and thus, it is difficult to increase the mechanical strength, and there has been a demand for further improvement in reliability of the prismatic secondary battery.

The present invention has been made in view of the above-described problem, and an object thereof is to provide a highly reliable the prismatic secondary battery by securing both mechanical strength and electrical characteristics between a metal body to which a bus bar of an external terminal is welded and a connection terminal which is joined with the metal body.

### Solution to Problem

In order to solve the above-described problem, the present application provides a prismatic secondary battery in which external terminals of a positive electrode and a negative electrode are disposed on one surface of a prismatic battery container and a flat wound group is housed in the battery container. One of the external terminals has a connection terminal, which passes through the battery container and is electrically connected to the flat wound group and a metal body which is joined with the connection terminal, and joints between the connection terminal and the metal body include a mechanical joint and a metallurgical joint.

### Advantageous Effects of Invention

According to the present invention, it is possible to provide the highly reliable the prismatic secondary battery by securing both the mechanical strength and the electrical characteristics between the metal body to which the bus bar of the external terminal is welded and the connection terminal which is joined with the metal body. Incidentally, other objects, configurations, and effects will be apparent from the following description of embodiments.

### Brief Description of Drawings

[FIG. 1] FIG. 1 is an exterior perspective view of a prismatic secondary battery.
[FIG. 2] FIG. 2 is an exploded perspective view.
[FIG. 3] FIG. 3 is an exploded perspective view of a flat wound group.
[FIG. 4A] FIG. 4A is a front view illustrating a part of a prismatic secondary battery according to a first embodiment and a bus bar.
[FIG. 4B] FIG. 4B is a plan view illustrating the main part of a battery lid assembly according to the first embodiment in an enlarged manner.
[FIG. 4C] FIG. 4C is a cross-sectional view taken along a line A-A of FIG. 4B.
[FIGS. 5(a) to 5(c)] FIGS. 5(a) to 5(c) are conceptual diagrams of formation of an external terminal.
[FIG. 6A] FIG. 6A is a plan view illustrating a state where the bus bar is welded to the external terminal.
[FIG. 6B] FIG. 6B is a cross-sectional view taken along a line A-A of FIG. 6A.
[FIG. 6C] FIG. 6C is a diagram illustrating another embodiment corresponding to the cross-sectional view taken along the line A-A of FIG. 6A.
[FIG. 6D] FIG. 6D is a diagram illustrating still another embodiment corresponding to the cross-sectional view taken along the line A-A of FIG. 6A.
[FIG. 7A] FIG. 7A is a front view illustrating a part of a prismatic secondary battery according to a second embodiment and the bus bar.
[FIG. 7B] FIG. 7B is a plan view illustrating the main part of a battery lid assembly according to the second embodiment in an enlarged manner.
[FIG. 7C] FIG. 7C is a cross-sectional view taken along a line A-A of FIG. 7B.
[FIG. 8A] FIG. 8A is a front view illustrating a part of a prismatic secondary battery according to a third embodiment and the bus bar.
[FIG. 8B] FIG. 8B is a plan view illustrating the main part of a battery lid assembly according to the third embodiment in an enlarged manner.
[FIG. 8C] FIG. 8C is a cross-sectional view taken along a line A-A of FIG. 8B.
[FIG. 9A] FIG. 9A is a front view illustrating a part of a prismatic secondary battery according to a fourth embodiment and the bus bar.
[FIG. 9B] FIG. 9B is a plan view illustrating the main part of a battery lid assembly according to the fourth embodiment in an enlarged manner.
[FIG. 9C] FIG. 9C is a cross-sectional view taken along a line A-A of FIG. 9B.
[FIG. 9D] FIG. 9D is an enlarged view of a section B of FIG. 9C.
[FIG. 10A] FIG. 10A is a front view illustrating a part of a prismatic secondary battery according to a fifth embodiment and the bus bar.
[FIG. 10B] FIG. 10B is a plan view illustrating the main part of a battery lid assembly according to the fifth embodiment in an enlarged manner.
[FIG. 10C] FIG. 10C is a cross-sectional view taken along a line A-A of FIG. 10B.
[FIG. 10D] FIG. 10D is an enlarged view of a section B of FIG. 10C.
[FIG. 11A] FIG. 11A is a front view illustrating a part of a prismatic secondary battery according to a sixth embodiment and the bus bar.
[FIG. 11B] FIG. 11B is a plan view illustrating the main part of a battery lid assembly according to the sixth embodiment in an enlarged manner.
[FIG. 11C] FIG. 11C is a cross-sectional view taken along a line A-A of FIG. 11B.
[FIG. 11D] FIG. 11D is an enlarged view of a section B of FIG. 11C.
[FIG. 12A] FIG. 12A is a front view illustrating a part of a prismatic secondary battery according to a seventh embodiment and the bus bar.
[FIG. 12B] FIG. 12B is a plan view illustrating a main part of a battery lid assembly according to the seventh embodiment in an enlarged manner.
[FIG. 12C] FIG. 12C is a cross-sectional view taken along a line A-A of FIG. 12B.
[FIG. 12D] FIG. 12D is an enlarged view of a section B of FIG. 12C.
[FIG. 13A] FIG. 13A is a front view illustrating a part of a prismatic secondary battery according to an eighth embodiment and the bus bar.
[FIG. 13B] FIG. 13B is a plan view illustrating the main part of a battery lid assembly according to the eighth embodiment in an enlarged manner.
[FIG. 13C] FIG. 13C is a cross-sectional view taken along a line A-A of FIG. 13B.
[FIG. 13D] FIG. 13D is an enlarged view of a section B of FIG. 13C.
[FIG. 14A] FIG. 14A is a front view illustrating a part of a prismatic secondary battery according to a ninth embodiment and the bus bar.
[FIG. 14B] FIG. 14B is a plan view illustrating the main part of a battery lid assembly according to the ninth embodiment in an enlarged manner.
[FIG. 14C] FIG. 14C is a cross-sectional view taken along a line A-A of FIG. 14B.
[FIG. 14D] FIG. 14D is an enlarged view of a section B of FIG. 14C.

### Description of Embodiments

Next, embodiments of the present invention will be described with reference to the drawings.

### [First Embodiment]

The present embodiment is a prismatic secondary battery in which external terminals of a positive electrode and a negative electrode are disposed on one surface of a prismatic battery container and a flat wound group is built in the battery container. One of the external terminals has a connection terminal, which passes through the battery container and is electrically connected to the flat wound group and a heterogeneous metal body which is joined with the connection terminal outside the battery container. Further, joints of the connection terminal and the metal body include a mechanical joint and a metallurgical joint, the mechanical joint has a screw structure, the metallurgical joint has a welding structure in which the connection terminal and the metal body are lap-welded by laser welding.

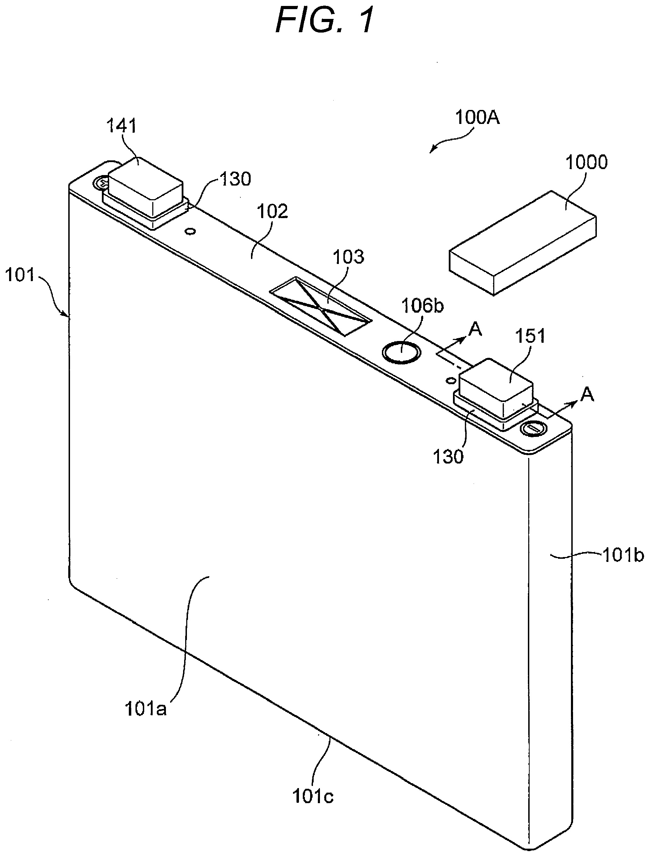

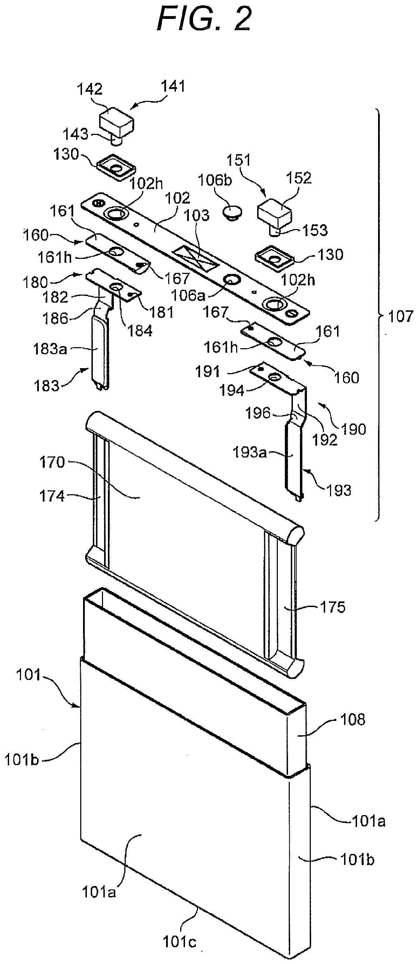

As illustrated in FIGS. 1 and 2, a prismatic secondary battery 100A is configured of a battery can 101 and a battery lid 102. Each material of the battery can 101 and the battery lid 102 is aluminum, an aluminum alloy, or the like.

The battery lid 102 has a flat rectangular shape and is welded to occlude an opening of the battery can 101. That is, the battery lid 102 seals the opening of the battery can 101. The battery lid 102 is provided with a positive electrode external terminal 141 and a negative electrode external terminal 151. In addition, the battery lid 102 is provided with a gas discharge valve 103. The gas discharge valve 103 is formed by partly thinning the battery lid 102 by, for example, press processing. A cleaved groove is formed in the gas discharge valve 103 is formed with a cleaved groove so as to form a large opening when cleaved. When a gas is generated as the prismatic secondary battery 100A generates heat due to abnormality such as overcharging or the like so that the pressure inside the battery increases to reach a predetermined pressure, the gas discharge valve 103 is cleaved to discharge the gas from the inside and reduce the pressure inside the battery. Further, an injection stopper 106b is welded to the battery lid 102 to seal a liquid inlet 106a which is configured to inject an electrolyte inside the battery.

There is a case where a plurality of the prismatic secondary batteries 100A are connected in series and used as an assembled battery, and in such a case, the positive electrode external terminal 141 and the negative electrode external terminal 151 are connected by welding a bus bar 1000 therebetween. For example, the positive electrode external terminal 141 is made of aluminum or an aluminum alloy, the negative electrode external terminal 151 has a connection terminal 153 made of copper or a copper alloy and a metal body 152 made of aluminum or an aluminum alloy. In addition, the bus bar 1000 is made of the same aluminum or an aluminum alloy as that of the positive electrode external terminal 141. The present application relates to a structure of this terminal.

A flat wound group 170 is housed in the battery can 101. The battery can 101 includes a pair of wide surfaces 101a, a pair of narrow surfaces 101b, and the bottom surfaces 101c and is formed in a rectangular box shape whose top surface is opened. The flat wound group 170 is housed in the battery can 101 in the state of being covered by an insulation case 108. A material of the insulation case 108 is a resin having insulating properties such as polypropylene. Accordingly, an inner surface of the battery can 101 and the flat wound group 170 are electrically insulated from each other.

The positive electrode external terminal 141 is electrically connected to a positive electrode 174 of the flat wound group 170 via a positive electrode current collector 180, and a negative electrode external terminal 151 is electrically connected to a negative electrode 175 of the flat wound group 170 via a negative electrode current collector 190. Thus, power is supplied to an external load via the positive electrode external terminal 141 and the negative electrode external terminal 151, or externally generated power is supplied to the flat wound group 170 to be charged via the positive electrode external terminal 141 and the negative electrode external terminal 151.

A battery lid assembly 107 is configured to include the battery lid 102, the positive electrode external terminal 141 and the negative electrode external terminal 151 attached to each of a pair of through-holes 102h provided in the battery lid 102, the positive electrode current collector 180 and the negative electrode current collector 190, a pair of gaskets 130, and a pair of insulation members 160.

Each material of the positive electrode external terminal 141, the positive electrode current collector 180, and the metal body 152 of the negative electrode external terminal 151 is aluminum or an aluminum alloy. The positive electrode external terminal 141 is electrically connected to the positive electrode current collector 180. Each material of the connection terminal 153 of the negative electrode external terminal 151 and the negative electrode current collector 190 is copper or a copper alloy. The negative electrode external terminal 151 is electrically connected to the negative electrode current collector 190. A material of the insulation member 160 and the gasket 130 is a resin having insulating properties such as polybutylene terephthalate, polyphenylene sulfide, and a perfluoroalkoxy fluororesin.

The liquid inlet 106a through which the electrolyte is injected inside the battery can 101 is drilled in the battery lid 102. The liquid inlet 106a is sealed by inserting a sealing material 106c into the liquid inlet 106a after the injection of the electrolyte, press-fitting the injection stopper 106b into the sealing material 106c and then performing welding. As the electrolyte, for example, a nonaqueous electrolyte can be used in which a lithium salt such as hexafluorophosphate lithium (LiPF6) is dissolved in a carbonic ester-based, such as ethylene carbonate, organic solvent.

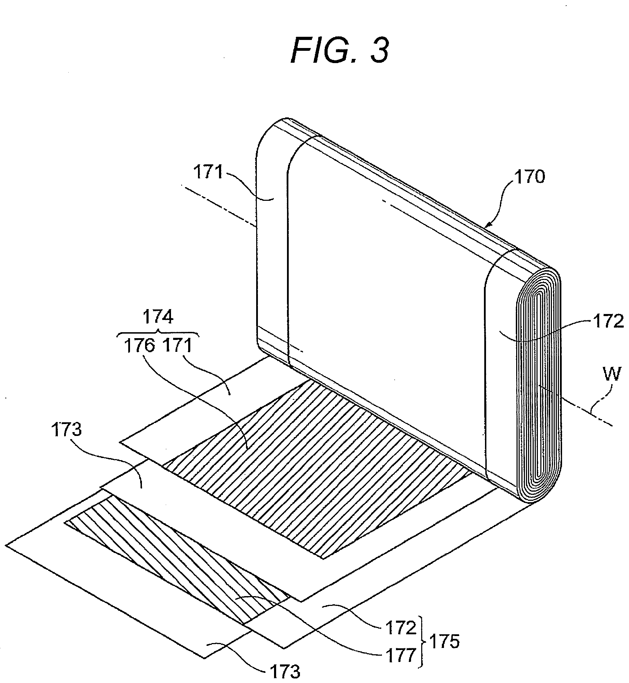

The flat wound group 170 will be described with reference to FIG. 3. FIG. 3 is a perspective view illustrating the flat wound group 170. The flat wound group 170 serving as an electric power storage element which has a stacked structure in which the elongated positive electrode 174 and negative electrode 175 are wound about the winding axis W in a flat shape with the separator 173 interposed therebetween as illustrated in FIG. 3.

The positive electrode 174 includes the positive electrode foil 171 and positive electrode active material mixture layers 176 formed by coating both surfaces of the positive electrode foil 171 with a positive electrode active material mixture obtained by blending a binding material (binder) with a positive electrode active material. The negative electrode 175 includes the negative electrode foil 172 and negative electrode active material mixture layers 177 formed by coating both surfaces of the negative electrode foil 172 with a negative electrode active material mixture obtained by blending a binding material (binder) with a negative electrode active material. Charge and discharge occur between the positive electrode active material and the negative electrode active material.

The positive electrode foil 171 is an aluminum alloy foil having a thickness of about 20 to 30 µm, and the negative electrode foil 172 is a copper alloy foil having a thickness of about 15 to 20 pm. A material of the separator 173 is a porous polyethylene resin. The positive electrode active material is a lithium-containing transition metal double oxide such as lithium manganate, and the negative electrode active material is a carbon material such as carbon black that is capable of reversibly absorbing and discharging lithium ions.

One of both end portions of the flat wound group 170 in a width direction (direction of the winding axis W orthogonal to a winding direction) is configured as a portion in which an uncoated portion (exposed portion of the positive electrode foil 171) on which the positive electrode active material mixture layer 176 is not formed is stacked, and the other end portion is configured as a portion in which an uncoated portion (exposed portion of the negative electrode foil 172) on which the negative electrode active material mixture layer 177 is not formed is stacked. A stacked body of the uncoated portion on the positive electrode side and a stacked body of the uncoated portion on the negative electrode side are connected to the positive electrode current collector 180 and the negative electrode current collector 190 of the battery lid assembly 107 to be described later (see FIG. 2), respectively, by ultrasonic joining. After the connection by ultrasonic welding, the entire flat wound group 170 is covered by the insulation case 108 and is housed in the battery can 101, and the battery can 101 and the battery lid 102 are sealed by laser welding.

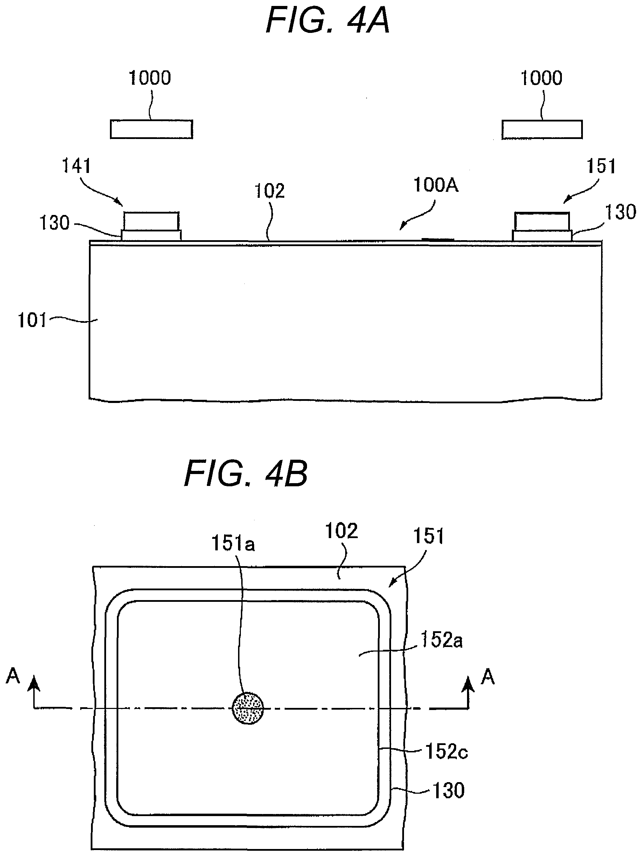

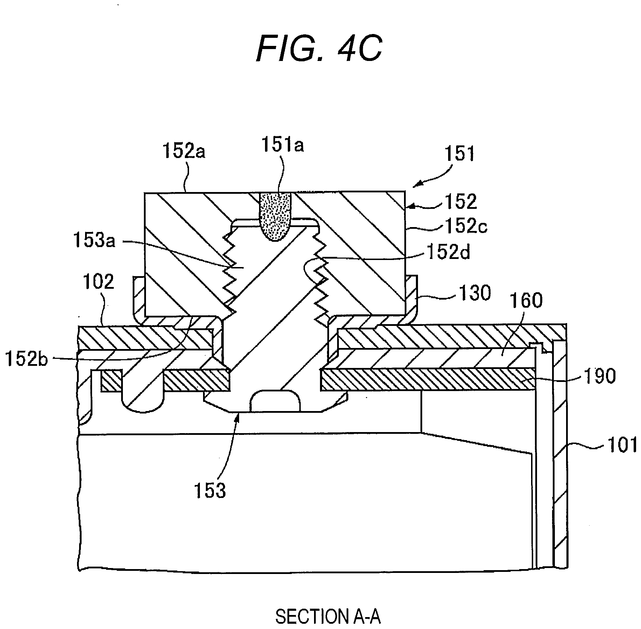

FIG. 4A is a front view illustrating a part of the prismatic secondary battery and the bus bar according to the first embodiment, FIG. 4B is a plan view illustrating the main part of the battery lid assembly according to the first embodiment, and FIG. 4C is a cross-sectional view taken along a line A-A of FIG. 4B.

As illustrated in FIG. 4A, the positive electrode external terminal 141 and the negative electrode external terminal 151 are provided in the battery lid 102 with the gasket 130 interposed therebetween. As described above, when the plurality of prismatic secondary batteries are connected in series to be used as the assembled battery, the bus bar 1000 is welded between the positive electrode external terminal 141 and the negative electrode external terminal 151.

When the bus bar 1000 is made of aluminum or an aluminum alloy, it is possible to perform the welding of the bus bar having no problem in terms of strength by forming the positive electrode external terminal 141 and the metal body 152 of the negative electrode external terminal 151 using aluminum or an aluminum alloy and the connection terminal 153 of the negative electrode external terminal 151 using copper or a copper alloy so that the joining with the bus bar 1000 is obtained by welding between the aluminum or the aluminum alloys.

In the negative electrode external terminal 151, the metal body 152 and the connection terminal 153 are joined with each other using both a mechanical joining method and a metallurgical joining method, and the mechanical joint has the screw structure, the metallurgical joint has the welding structure in which the metal body 152 and the connection terminal 153 are lap-welded by the laser welding. Accordingly, the mechanical strength between the metal body 152 and the connection terminal 153 can be secured by the mechanical joining, and the electrical characteristics can be secured by the metallurgical joining. Therefore, it is possible to improve the reliability of the prismatic secondary battery 100A.

In addition, when the bus bar 1000 is made of copper or a copper alloy, although not particularly illustrated, it is possible to perform the welding of the bus bar having no problem in terms of strength by configuring the positive electrode external terminal 141 to include a metal body and a connection terminal and forming the metal body of the positive electrode external terminal 141 and the negative electrode external terminal 151 using copper or a copper alloy and the connection terminal of the positive electrode external terminal using aluminum or an aluminum alloy so that the metal body of the positive electrode external terminal 141 and the bus bar 1000 are welded between the copper or the copper alloys. Similarly, the metal body and the connection terminal are joined with each other also using both the mechanical joining method and the metallurgical joining method in the positive electrode external terminal 141 in this case, and accordingly, it is possible to improve the reliability of the prismatic secondary battery 100A.

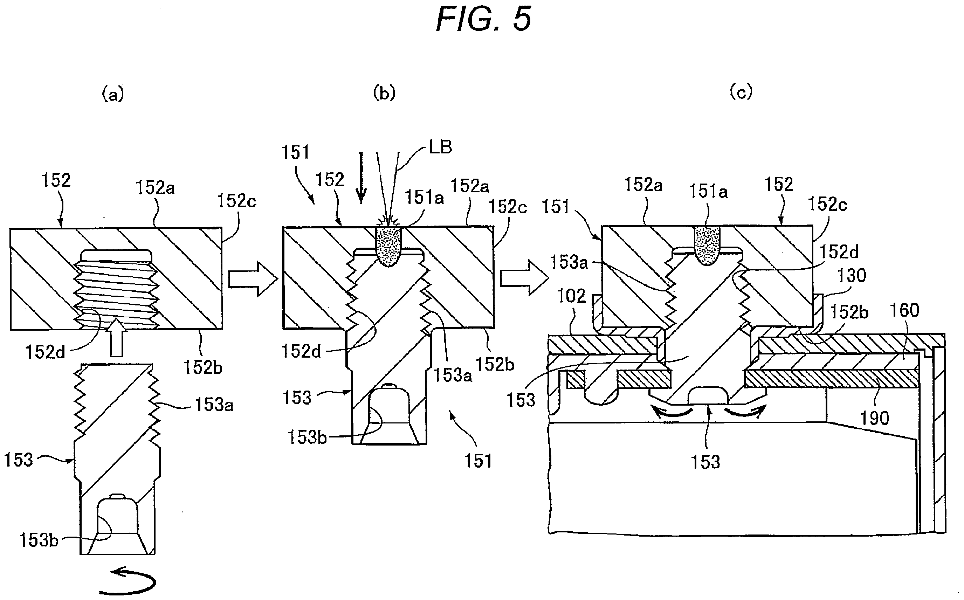

FIG. 5 illustrates an assembling method of the negative electrode external terminal and the battery lid assembly on the negative electrode side when the bus bar is made of aluminum or an aluminum alloy.

The negative electrode external terminal 151 includes, for example, the metal body 152 made of aluminum or an aluminum alloy and the connection terminal 153 made of copper or a copper alloy. The metal body 152 has a substantially rectangular flat block shape when seen in a plan view and has a lid-opposing surface 152b which opposes the battery lid 102 with the gasket 130 interposed therebetween, a welding surface 152a which is disposed at a position spaced apart from the lid-opposing surface 152b and welded with the bus bar 1000, and a side surface 152c which extends from a circumferential edge of the welding surface 152a to the circumferential edge of the lid-opposing surface 152b. Further, a screw hole 152d is provided from a substantially central position of the lid-opposing surface 152b toward the welding surface 152a. The screw hole 152d has a depth such that a predetermined thickness remains between the screw hole 152d and the welding surface 152a. The connection terminal 153 has a round bar shape, a male screw to be screwed to the screw hole 152d is threaded in a proximal end portion 153a thereof, and a concave portion for caulking is provided in a tip end portion 153b thereof.

In the negative electrode external terminal 151, the connection terminal 153 and the metal body 152 are mechanically bound with each other by screwing the proximal end portion 153a of the connection terminal 153 into the screw hole 152d of the metal body 152 as illustrated in FIG. 5(a). Further, the connection terminal 153 and the metal body 152 are metallurgically joined with each other by irradiating the welding surface 152a of the metal body 152 with laser LB for laser welding and performing lap-welding to melt a part from the welding surface 152a of the metal body 152 to the proximal end portion 153a of the connection terminal 153 through a bottom surface of the screw hole 152d as illustrated in FIG. 5(b). Through this metallurgical joining, a welding portion 151a, obtained by metal binding, is formed between the proximal end portion 153a of the connection terminal 153 and the welding surface 152a of the metal body 152, and the metal body 152 and the connection terminal 153 are electrically connected to each other.

Thereafter, the gasket 130, the battery lid 102, the insulation member 160, the negative electrode current collector 190 are superimposed on each other, and the connection terminal 153 of the negative electrode external terminal 151 is inserted into a through-hole which passes through the above-describe parts as illustrated in FIG. 5(c). Further, the tip end portion of the connection terminal 153 is folded to be spread toward a radially outward side, and the gasket 130, the battery lid 102, the insulation member 160, and the negative electrode current collector 190 are integrated with each other, thereby assembling the battery lid assembly 107 on the negative electrode side.

Although a description will be given by exemplifying a case where the bus bar is made of aluminum or an aluminum alloy, hereinafter, it is possible to assemble the positive electrode external terminal 141 and the battery lid assembly 107 on the positive electrode side using the same method even in a case where the bus bar is made of copper or a copper alloy by forming the metal body of the positive electrode external terminal 141 using copper or a copper alloy and the connection terminal using aluminum or an aluminum alloy.

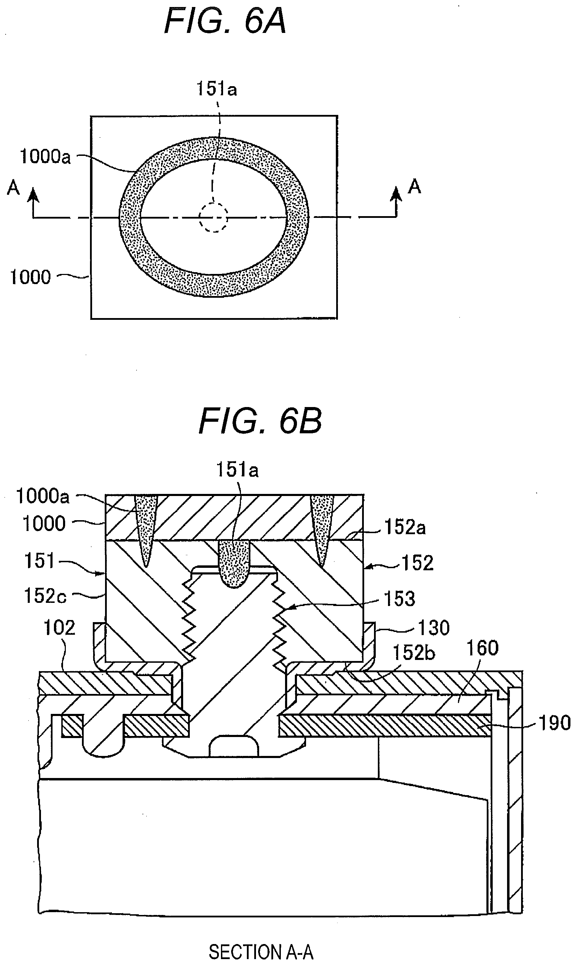

The welding portion 151a formed in the above-described method is obtained by performing, for example, laser welding in the state of bringing the bus bar 1000 into contact with the welding surface 152a of the negative electrode external terminal 151, and thus, there is a risk that strength of a bus bar welding portion 1000a decreases if the bus bar is welded together with the welding portion 151a in the metal body 152 of the negative electrode external terminal 151 and the connection terminal 153 as illustrated in FIGS. 6A and 6B. Therefore, it is necessary to perform the welding by avoiding the welding portion 151a when the bus bar 1000 is welded. In the present embodiment, the bus bar welding portion 1000a is formed in an elliptical shape so as to surround the welding portion 151a.

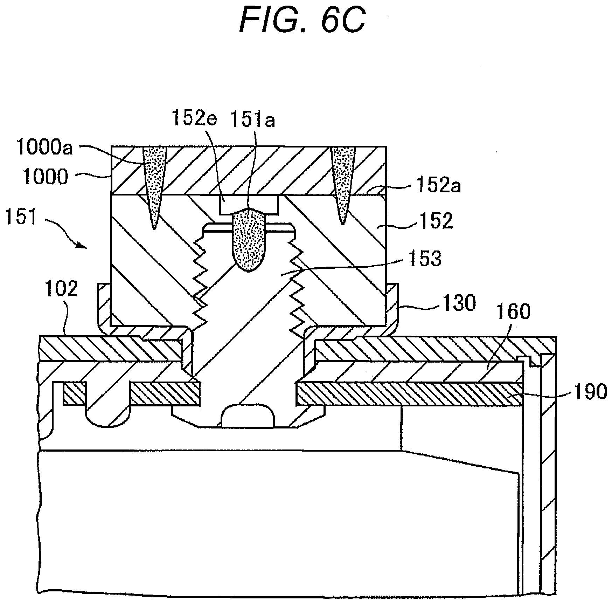

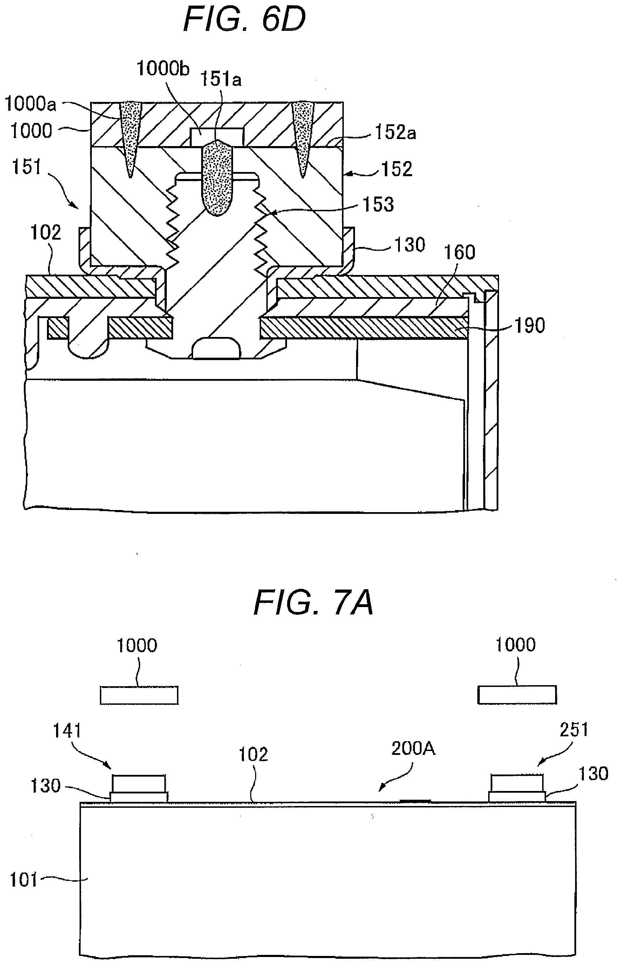

In addition, when it is difficult to bring the bus bar 1000 into surface-contact with the welding surface 152a in a case where the welding portion 151a protrudes more than the welding surface 152a of the metal body 152 and a gap between the bus bar 1000 and the welding surface 152a becomes a problem, it is possible to solve the problem by providing a concave portion 152e in a part in which the welding portion 151a of the metal body 152 is to be formed in advance as illustrated in FIG. 6C or providing a concave portion 1000b in the bus bar 1000 as illustrated in FIG. 6D.

In addition, when there is moisture in the gap, which is formed between the proximal end portion 153a of the metal body 152 of the negative electrode external terminal 151 and the screw hole 152d of the connection terminal 153, there is a risk that corrosion (so-called electric corrosion) caused by the moisture causes a problem. In such a case, it is possible to solve the problem by filling the gap with a resin, a binding material, a gap corrosion inhibitor, or the like. At the time, it is possible to prevent influence on weldability between the metal body 152 and the connection terminal 153 by performing masking in a part in which the welding portion 151a is to be formed. In addition, it is possible to solve the problem by performing assembling in nitrogen atmosphere, then, performing welding and sealing, and injecting filler such as a nitrogen gas into the gap, as another method. In addition, the welding and sealing may be performed after performing assembling in vacuum.

In addition, the welding between the metal body 152 and the connection terminal 153 is performed using the laser welding in the present embodiment, but may be performed using another metallurgical joining method, for example, friction stir welding (FSW), electron beam welding, resistance welding, pressure welding, arc welding, fusion welding, or the like without being limited thereto.

As described above, the metal body 152 and the connection terminal 153 are joined with each other using both the mechanical joining method and the metallurgical joining method in the negative electrode external terminal 151, and the mechanical joint has the screw structure, the metallurgical joint has the welding structure in which the metal body 152 and the connection terminal 153 are lap-welded by the laser welding. Accordingly, the mechanical strength between the metal body 152 and the connection terminal 153 can be secured by the mechanical joining, and the electrical characteristics can be secured by the metallurgical joining. Therefore, it is possible to improve the reliability of the prismatic secondary battery 100A. In particular, the screw structure is provided as the mechanical joint in the present embodiment, and thus, it is possible to obtain a significantly large mechanical strength as compared to the related art.

### [Second Embodiment]

Next, a second embodiment of the present invention will be described with reference to FIGS. 7A to 7C, hereinafter.

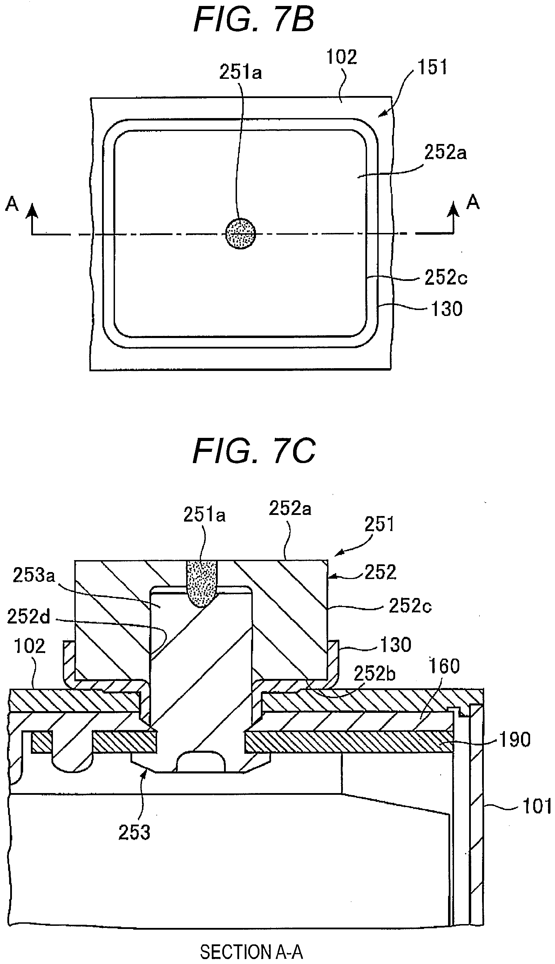

FIG. 7A is a front view illustrating a part of a prismatic secondary battery according to the second embodiment and the bus bar, FIG. 7B is a plan view illustrating the main part of a battery lid assembly according to the second embodiment, and FIG. 7C is a cross-sectional view taken along a line A-A of FIG. 7B. Incidentally, a description will not be repeated regarding the configurations attached with the same reference signs and parts having the same functions as illustrated in FIGS. 1 to 6D which have been already described.

A characteristic point of the present embodiment is that a mechanical joint has a press-fit structure instead of the screw structure according to the first embodiment. The present embodiment is a prismatic secondary battery in which external terminals of a positive electrode and a negative electrode are disposed on one surface of a prismatic battery container and a flat wound group is built in the battery container. One of the external terminals has a connection terminal, which passes through the battery container and is electrically connected to the flat wound group and a heterogeneous metal body which is joined with the connection terminal outside the battery container. Further, joints of the connection terminal and the metal body include the mechanical joint and a metallurgical joint, the mechanical joint has the press-fit structure, the metallurgical joint has a welding structure in which the connection terminal and the metal body are lap-welded by laser welding.

A negative electrode external terminal 251 of a prismatic secondary battery 200A includes a metal body 252 made of aluminum or an aluminum alloy and a connection terminal 253 made of copper or a copper alloy. The metal body 252 has a substantially rectangular flat block shape when seen in a plan view and has a lid-opposing surface 252b which opposes the battery lid 102 with the gasket 130 interposed therebetween, a welding surface 252a which is disposed in parallel to the battery lid 102 and welded with the bus bar 1000, and a side surface 252c which extends from a circumferential edge of the welding surface 252a to the circumferential edge of the lid-opposing surface 252b. Further, a round hole 252d is provided in a substantially central position of the lid-opposing surface 252b to have a predetermined depth toward the welding surface 252a. The connection terminal 253 has a round bar shape, and a proximal end portion 253a is press-fitted into the round hole 252d.

In the negative electrode external terminal 251, the connection terminal 253 and the metal body 252 are mechanically joined with each other by press-fitting the proximal end portion 253a of the connection terminal 253 into the round hole 252d of the metal body 252. Further, the connection terminal 253 and the metal body 252 are metallurgically joined with each other by irradiating the welding surface 252a of the metal body 252 with laser for laser welding and performing lap-welding to melt a part from the welding surface 252a of the metal body 252 to the proximal end portion 253a of the connection terminal 253 through a bottom surface of the round hole 252d. Through this metallurgical joining, a welding portion 251a, obtained by metal binding, is formed between the proximal end portion 253a of the connection terminal 253 and the welding surface 252a of the metal body 252, and the metal body 252 and the connection terminal 253 are electrically connected to each other.

As described above, the metal body 252 and the connection terminal 253 are joined with each other using both the mechanical joining method and the metallurgical joining method in the negative electrode external terminal 251, and the mechanical joint has the press-fit structure, the metallurgical joint has the welding structure in which the metal body 252 and the connection terminal 253 are lap-welded by the laser welding. Accordingly, the mechanical strength between the metal body 252 and the connection terminal 253 can be secured by the mechanical joining, and the electrical characteristics can be secured by the metallurgical joining. Therefore, it is possible to improve the reliability of the prismatic secondary battery 200A. In particular, the press-fit structure is provided as the mechanical joint in the present embodiment, and thus, it is possible to omit the process of forming the male screw in the proximal end portion 153a of the connection terminal 253 and forming the screw hole 152d in the metal body 152 as compared to the first embodiment. Therefore, the structure is simple and can be easily manufactured, and the manufacture cost can be suppressed to be low.

### [Third Embodiment]

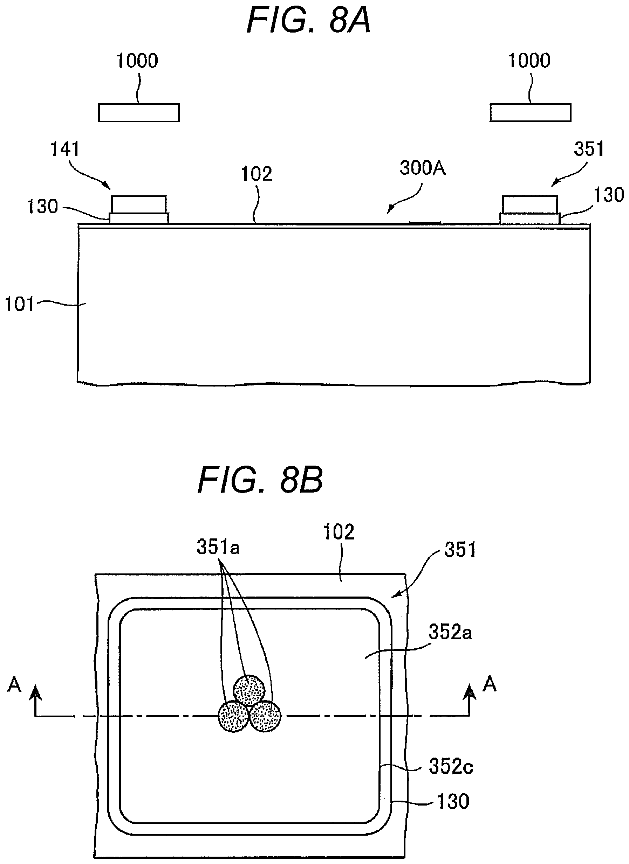

Next, a third embodiment of the present invention will be described with reference to FIGS. 8A to 8C, hereinafter.

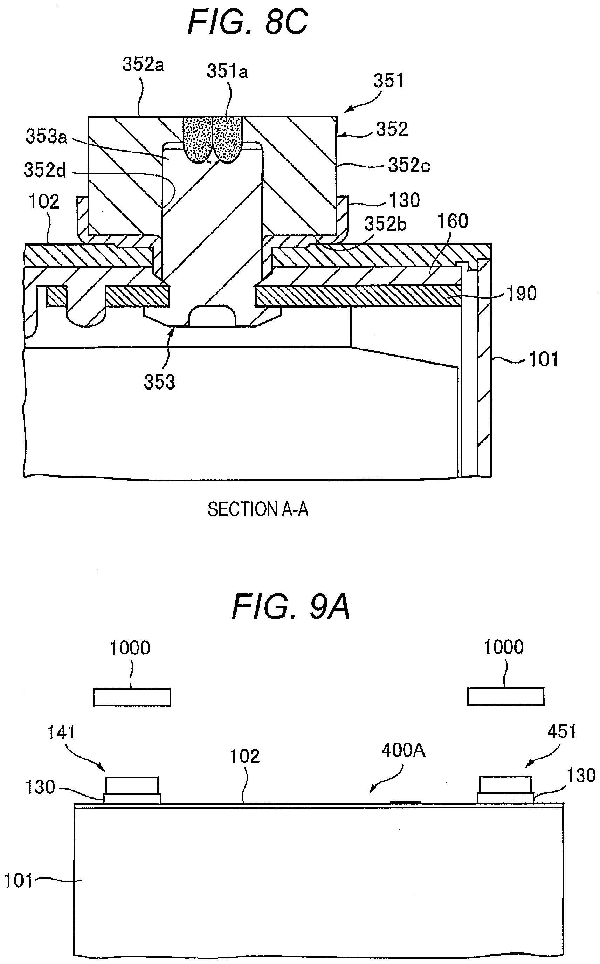

FIG. 8A is a front view illustrating a part of a prismatic secondary battery according to the third embodiment and the bus bar, FIG. 8B is a plan view illustrating the main part of a battery lid assembly according to the third embodiment, and FIG. 8C is a cross-sectional view taken along a line A-A of FIG. 8B. Incidentally, a description will not be repeated regarding the configurations attached with the same reference signs and parts having the same functions as illustrated in FIGS. 1 to 6D which have been already described.

A characteristic point of the present embodiment is that a plurality of lap-welded welding portions are provided. The present embodiment is a prismatic secondary battery in which external terminals of a positive electrode and a negative electrode are disposed on one surface of a prismatic battery container and a flat wound group is built in the battery container. One of the external terminals has a connection terminal, which passes through the battery container and is electrically connected to the flat wound group and a heterogeneous metal body which is joined with the connection terminal outside the battery container. Further, joints of the connection terminal and the metal body include a mechanical joint and a metallurgical joint, the mechanical joint has a press-fit structure, the metallurgical joint has a welding structure in which the connection terminal and the metal body are lap-welded at a plurality of portions laser welding.

A negative electrode external terminal 351 of a prismatic secondary battery 300A includes a metal body 352 made of aluminum or an aluminum alloy and a connection terminal 353 made of copper or a copper alloy. The metal body 352 has a substantially rectangular flat block shape when seen in a plan view and has a lid-opposing surface 352b which opposes the battery lid 102 with the gasket 130 interposed therebetween, a welding surface 352a which is disposed in parallel to the battery lid 102 and welded with the bus bar 1000, and a side surface 352c which extends from a circumferential edge of the welding surface 352a to the circumferential edge of the lid-opposing surface 352b. Further, a round hole 352d is provided in a substantially central position of the lid-opposing surface 352b to have a predetermined depth toward the welding surface 352a. The connection terminal 353 has a round bar shape, and a proximal end portion 353a is press-fitted into the round hole 352d.

In the negative electrode external terminal 351, the connection terminal 353 and the metal body 352 are mechanically joined with each other by press-fitting the proximal end portion 353a of the connection terminal 353 into the round hole 352d of the metal body 352. Further, the connection terminal 353 and the metal body 352 are metallurgically joined with each other by irradiating the welding surface 352a of the metal body 352 with laser for laser welding and performing lap-welding to melt a part from the welding surface 352a of the metal body 352 to the proximal end portion 353a of the connection terminal 353 through a bottom surface of the round hole 352d. In the present embodiment, three portions are lap-welded. Through this metallurgical joining, a plurality of welding portions 351a, obtained by metal binding, are formed between the proximal end portion of the connection terminal 353 and the welding surface 352a of the metal body 352, and the metal body 352 and the connection terminal 353 are electrically connected to each other.

As described above, the metal body 352 and the connection terminal 353 are joined with each other using both the mechanical joining method and the metallurgical joining method in the negative electrode external terminal 351, and the mechanical j oint has the press-fit structure, the metallurgical joint has the welding structure in which the metal body 352 and the connection terminal 353 are lap-welded at the plurality of portions by the laser welding. Accordingly, the mechanical strength between the metal body 352 and the connection terminal 353 can be secured by the mechanical joining, and the electrical characteristics can be secured by the metallurgical joining. Therefore, it is possible to improve the reliability of the prismatic secondary battery 200A. In particular, the plurality of portions are lap-welded according to the present embodiment, it is possible to increase the cross-sectional area of the metallurgical joint by the corresponding portions, and it is possible to reduce electrical resistance between the metal body 352 and the connection terminal 353.

### [Fourth Embodiment]

Next, a fourth embodiment of the present invention will be described with reference to FIGS. 9A to 9D, hereinafter.

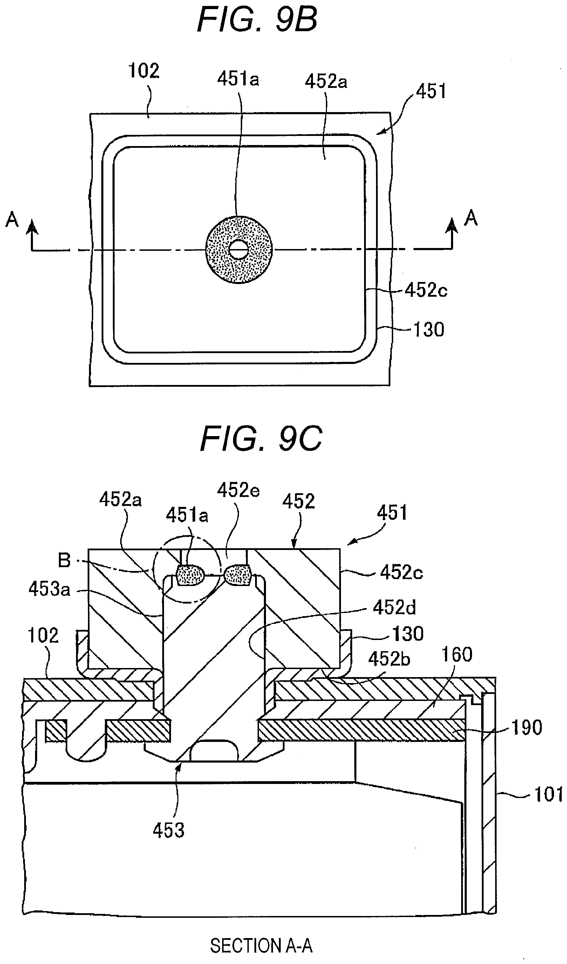

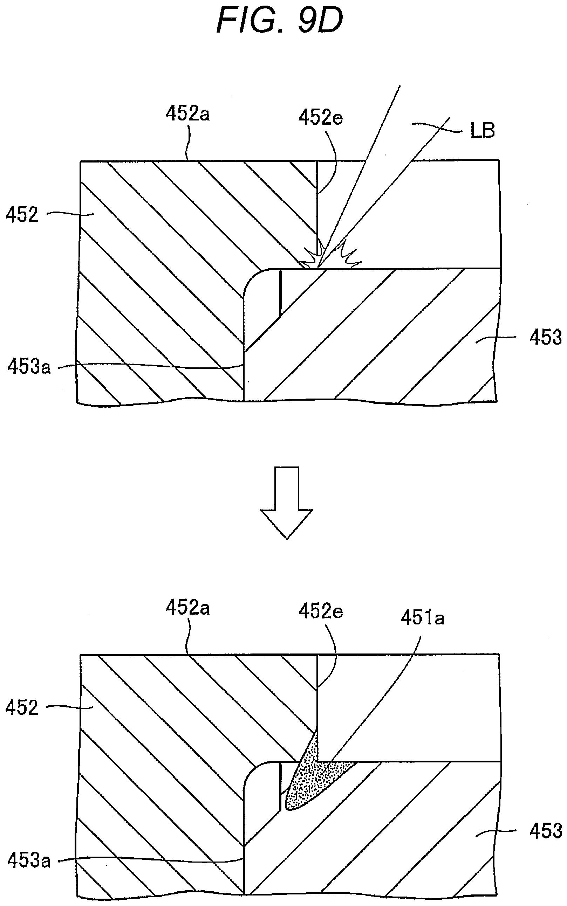

FIG. 9A is a front view illustrating a part of a prismatic secondary battery according to the fourth embodiment and the bus bar, FIG. 9B is a plan view illustrating the main part of a battery lid assembly according to the fourth embodiment, FIG. 9C is a cross-sectional view taken along a line A-A of FIG. 9B, and FIG. 9D is an enlarged view of a section B of FIG. 9C. Incidentally, a description will not be repeated regarding the configurations attached with the same reference signs and parts having the same functions as illustrated in FIGS. 1 to 6D which have been already described.

A characteristic point of the present embodiment is that a metallurgical joint has a welding structure obtained by fillet-welding instead of the lap-welding according to the second and third embodiments. The present embodiment is a prismatic secondary battery in which external terminals of a positive electrode and a negative electrode are disposed on one surface of a prismatic battery container and a flat wound group is built in the battery container. One of the external terminals has a connection terminal, which passes through the battery container and is electrically connected to the flat wound group and a heterogeneous metal body which is joined with the connection terminal outside the battery container. Further, joints of the connection terminal and the metal body include the mechanical joint and a metallurgical joint, the mechanical j oint has the press-fit structure, the metallurgical joint has a welding structure in which the connection terminal and the metal body are fillet-welded by laser welding.

A negative electrode external terminal 451 of a prismatic secondary battery 400A includes a metal body 452 made of aluminum or an aluminum alloy and a connection terminal 453 made of copper or a copper alloy. The metal body 452 has a substantially rectangular flat block shape when seen in a plan view and has a lid-opposing surface 452b which opposes the battery lid 102 with the gasket 130 interposed therebetween, a welding surface 452a which is disposed in parallel to the battery lid 102 and welded with the bus bar 1000, and a side surface 452c which extends from a circumferential edge of the welding surface 452a to the circumferential edge of the lid-opposing surface 452b. Further, a round hole 452d is provided in a substantially central position of the lid-opposing surface 452b to have a predetermined depth toward the welding surface 452a. The connection terminal 453 has a round bar shape, and a proximal end portion 453a is press-fitted into the round hole 452d.

The welding surface 452a is provided with a through-hole 452e which passes through the round hole 452d to a bottom surface thereof. An opening of the through-hole 452e on the bottom surface side of the round hole 452d is completely occluded by an end surface of the proximal end portion 453a of the connection terminal 453, and the end surface of the proximal end portion 453a of the connection terminal 453 is exposed inside the through-hole 452e when the negative electrode external terminal 451 is seen in a plan view as illustrated in FIG. 9B. An inner diameter of the through-hole 452e is smaller than an outer diameter of the proximal end portion 453a of the connection terminal 453, and a circumferential edge region of the end surface opposes and abuts on the bottom surface of the round hole 452d and a central region of the end surface is exposed to the outside through the through-hole 452e in the end surface of the proximal end portion 453a.

In the negative electrode external terminal 451, the connection terminal 453 and the metal body 452 are mechanically joined with each other by press-fitting the proximal end portion 453a of the connection terminal 453 into the round hole 452d of the metal body 452. Further, the connection terminal 453 and the metal body 452 are metallurgically joined with each other by irradiating a boundary portion between the end surface of the proximal end portion 453a of the connection terminal 453 and an inner circumferential surface of the through-hole 452e of the metal body 452 with the laser LB for laser welding to perform fillet-welding as illustrated in FIG. 9D. Through this metallurgical joining, a welding portion 451a, obtained by metal binding, is formed in the boundary portion between the end surface of the proximal end portion 453a of the connection terminal 453 and the inner circumferential surface of the through-hole 452e of the metal body 452, and the metal body 452 and the connection terminal 453 are electrically connected to each other. The welding portion 451a is continuously formed over the entire circumference along the inner circumferential surface of the through-hole 452e.

As described above, the metal body 452 and the connection terminal 453 are joined with each other using both the mechanical joining method and the metallurgical joining method in the negative electrode external terminal 451, and the mechanical joint has the press-fit structure, the metallurgical joint has the welding structure in which the metal body 452 and the connection terminal 453 are fillet-welded by the laser welding. Accordingly, the mechanical strength between the metal body 452 and the connection terminal 453 can be secured by the mechanical joining, and the electrical characteristics can be secured by the metallurgical joining. Therefore, it is possible to improve the reliability of the prismatic secondary battery 400A.

In particular, the welding structure obtained by fillet-welding the metal body 452 and the connection terminal 453 is provided in the present embodiment, and thus, it is possible to perform the welding using little welding energy with a small-scale production equipment and to suppress the manufacture cost to be low as compared to the lap-welding according to the above-described first to third embodiments. In addition, it is possible to visually confirm a welding state of the metal body 452 and the connection terminal 453, and thus, it is possible to easily perform a confirmatory test of the welding and to provide a high-quality product.

### [Fifth Embodiment]

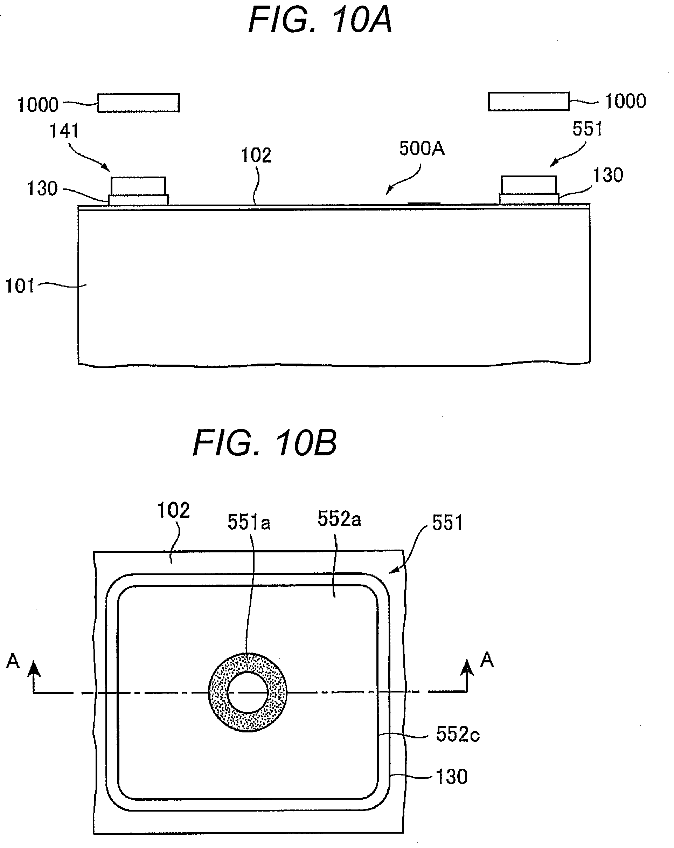

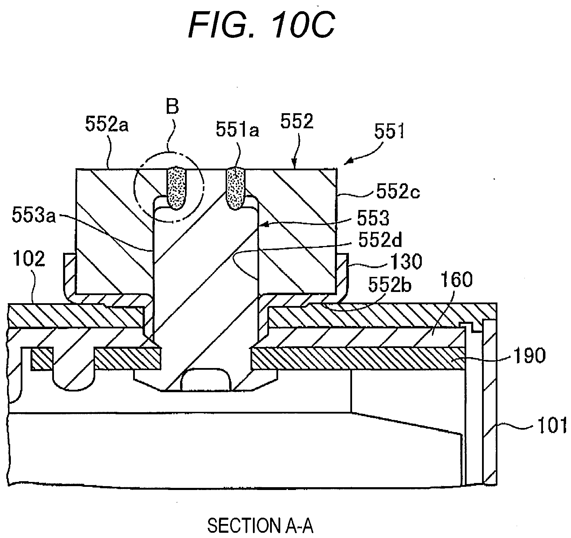

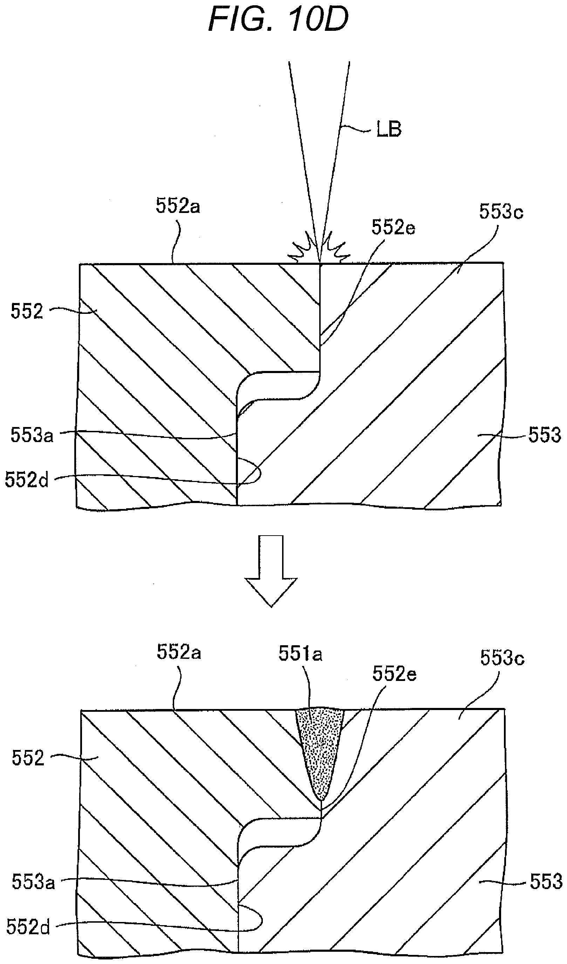

Next, a fifth embodiment of the present invention will be described with reference to FIGS. 10 to 10D, hereinafter.

FIG. 10A is a front view illustrating a part of a prismatic secondary battery according to the fifth embodiment and the bus bar, FIG. 10B is a plan view illustrating the main part of a battery lid assembly according to the fifth embodiment, FIG. 10C is a cross-sectional view taken along a line A-A of FIG. 10B, and FIG. 10D is an enlarged view of a section B of FIG. 10C. Incidentally, a description will not be repeated regarding the configurations attached with the same reference signs and parts having the same functions as illustrated in FIGS. 1 to 6D which have been already described.

A characteristic point of the present embodiment is that a metallurgical joint has a welding structure obtained by butt-welding. The present embodiment is a prismatic secondary battery in which external terminals of a positive electrode and a negative electrode are disposed on one surface of a prismatic battery container and a flat wound group is built in the battery container. One of the external terminals has a connection terminal, which passes through the battery container and is electrically connected to the flat wound group and a heterogeneous metal body which is joined with the connection terminal outside the battery container. Further, joints of the connection terminal and the metal body include the mechanical joint and a metallurgical joint, the mechanical joint has the press-fit structure, the metallurgical joint has a welding structure in which the connection terminal and the metal body are butt-welded by laser welding.

A negative electrode external terminal 551 of a prismatic secondary battery 500A includes a metal body 552 made of aluminum or an aluminum alloy and a connection terminal 553 made of copper or a copper alloy. The metal body 552 has a substantially rectangular flat block shape when seen in a plan view and has a lid-opposing surface 552b which opposes the battery lid 102 with the gasket 130 interposed therebetween, a welding surface 552a which is disposed in parallel to the battery lid 102 and welded with the bus bar 1000, and a side surface 552c which extends from a circumferential edge of the welding surface 552a to the circumferential edge of the lid-opposing surface 552b. Further, a round hole 552d is provided in a substantially central position of the lid-opposing surface 552b to have a predetermined depth toward the welding surface 552a. The connection terminal 553 has a round bar shape, and a proximal end portion 553a is press-fitted into the round hole 552d.

The welding surface 552a is provided with a through-hole 552e which passes through the round hole 552d to a bottom surface thereof. A cylindrical portion 553c which is fitted to the through-hole 552e is provided in the proximal end portion 553a of the connection terminal 553. An outer circumferential surface of the cylindrical portion 553c abuts on an inner circumferential surface of the through-hole 552e, and an end surface of the cylindrical portion 553c is flush with the welding surface 552a.

In the negative electrode external terminal 551, the connection terminal 553 and the metal body 552 are mechanically joined with each other by press-fitting the proximal end portion 553a of the connection terminal 553 into the round hole 552d of the metal body 552. Further, the connection terminal 553 and the metal body 552 are metallurgically joined with each other by irradiating a boundary portion between the outer circumferential surface of the cylindrical portion 553c of the connection terminal 553 and the inner circumferential surface of the through-hole 552e of the metal body 552 with the laser LB for laser welding to perform butt-welding as illustrated in FIG. 10D. Through this metallurgical joining, a welding portion 551a, obtained by metal binding, is formed in the boundary portion between the outer circumferential surface of the cylindrical portion 553c of the connection terminal 553 and the inner circumferential surface of the through-hole 552e of the metal body 552, and the metal body 552 and the connection terminal 553 are electrically connected to each other. The welding portion 551a is continuously formed over the entire circumference along the boundary portion between the outer circumferential surface of the cylindrical portion 553c of the connection terminal 553 and the inner circumferential surface of the through-hole 552e of the metal body 552 like a circumference.

As described above, the metal body 552 and the connection terminal 553 are joined with each other using both the mechanical joining method and the metallurgical joining method in the negative electrode external terminal 551, and the mechanical joint has the press-fit structure, the metallurgical joint has the welding structure in which the metal body 552 and the connection terminal 553 are butt-welded by the laser welding. Accordingly, the mechanical strength between the metal body 552 and the connection terminal 553 can be secured by the mechanical joining, and the electrical characteristics can be secured by the metallurgical joining. Therefore, it is possible to improve the reliability of the prismatic secondary battery 500A.

In particular, the welding structure obtained by butt-welding the metal body 552 and the connection terminal 553 is provided in the present embodiment, and thus, it is possible to perform the welding using little welding energy with the small-scale production equipment and to suppress the manufacture cost to be low as compared to the lap-welding according to the above-described first to third embodiments. In addition, it is possible to emit the laser LB for laser welding in the vertical direction to the welding surface 552a, and thus, the welding work is easier, and it is possible to manufacture the prismatic secondary battery in a simple manner as compared to the above-described fourth embodiment. In addition, it is possible to visually confirm a welding state of the metal body 552 and the connection terminal 553, and thus, it is possible to easily perform the confirmatory test of the welding and to provide the high-quality product.

### [Sixth Embodiment]

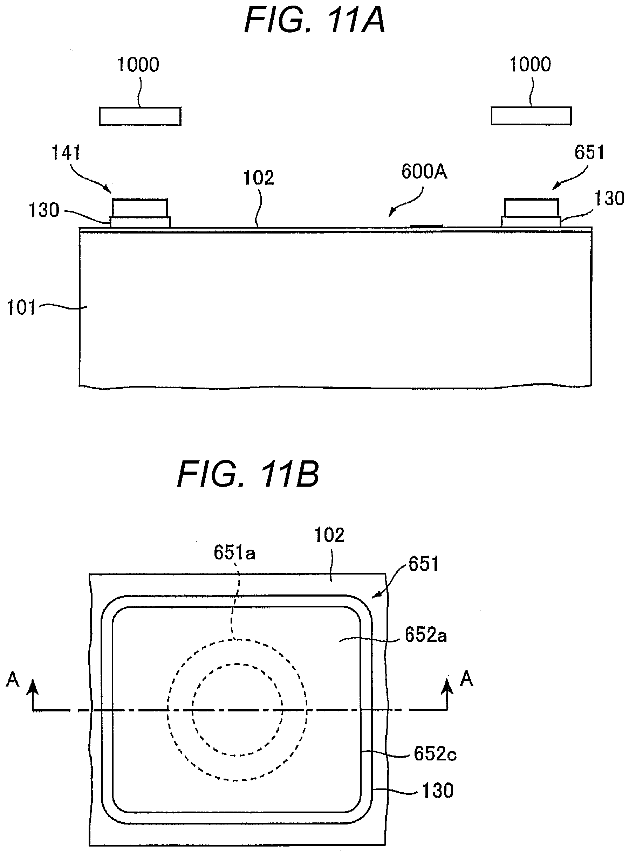

Next, a sixth embodiment of the present invention will be described with reference to FIGS. 11A to 11D, hereinafter.

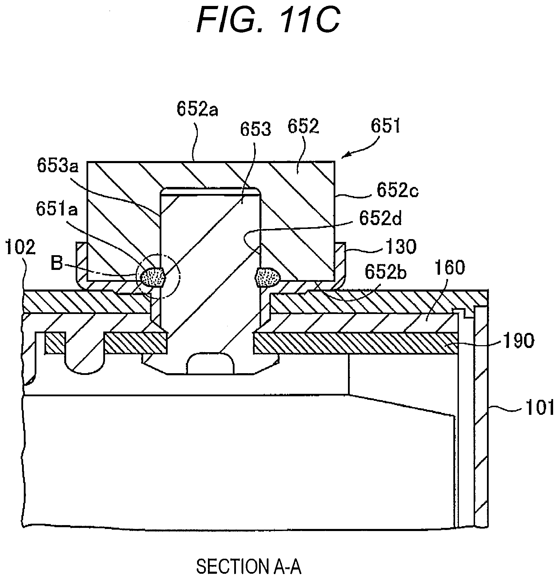

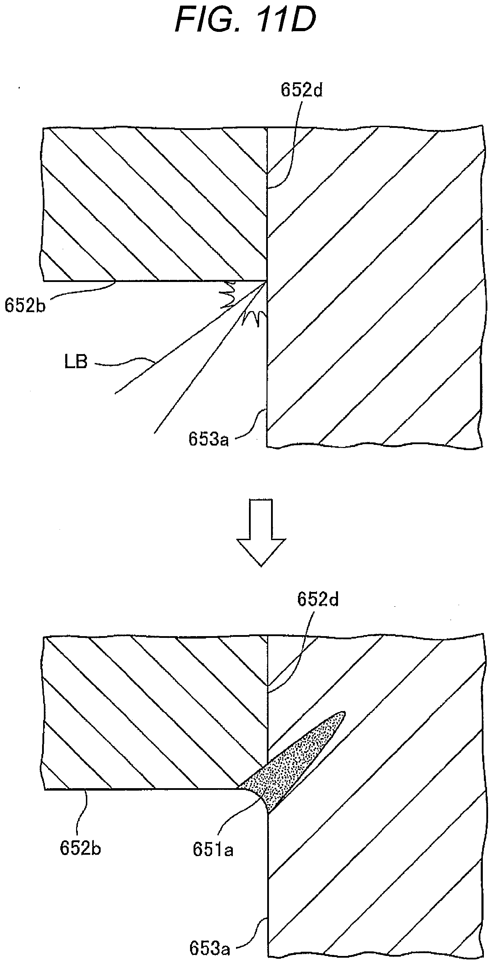

FIG. 11A is a front view illustrating a part of a prismatic secondary battery according to the sixth embodiment and the bus bar, FIG. 11B is a plan view illustrating the main part of a battery lid assembly according to the sixth embodiment, FIG. 11C is a cross-sectional view taken along a line A-A of FIG. 11B, and FIG. 11D is an enlarged view of a section B of FIG. 11C. Incidentally, a description will not be repeated regarding the configurations attached with the same reference signs and parts having the same functions as illustrated in FIGS. 1 to 6D which have been already described.

A characteristic point of the present embodiment is that a metallurgical joint is provided on an opposing surface side of a metal body and has a welding structure obtained by fillet-welding. The present embodiment is a prismatic secondary battery in which external terminals of a positive electrode and a negative electrode are disposed on one surface of a prismatic battery container and a flat wound group is built in the battery container. One of the external terminals has a connection terminal, which passes through the battery container and is electrically connected to the flat wound group and a heterogeneous metal body which is joined with the connection terminal outside the battery container. Further, joints of the connection terminal and the metal body include the mechanical joint and a metallurgical joint, the mechanical joint has the press-fit structure, the metallurgical joint has a welding structure in which the connection terminal and the metal body are fillet-welded by laser welding.

A negative electrode external terminal 651 of a prismatic secondary battery 600A includes a metal body 652 made of aluminum or an aluminum alloy and a connection terminal 653 made of copper or a copper alloy. The metal body 652 has a substantially rectangular flat block shape when seen in a plan view and has a lid-opposing surface 652b which opposes the battery lid 102 with the gasket 130 interposed therebetween, a welding surface 652a which is disposed in parallel to the battery lid 102 and welded with the bus bar 1000, and a side surface 652c which extends from a circumferential edge of the welding surface 652a to the circumferential edge of the lid-opposing surface 652b. Further, a round hole 652d is provided in a substantially central position of the lid-opposing surface 652b to have a predetermined depth toward the welding surface 652a. The connection terminal 653 has a round bar shape, and a proximal end portion 653a is press-fitted into the round hole 652d.

In the negative electrode external terminal 651, the connection terminal 653 and the metal body 652 are mechanically joined with each other by press-fitting the proximal end portion 653a of the connection terminal 653 into the round hole 652d of the metal body 652. Further, the connection terminal 653 and the metal body 652 are metallurgically joined with each other by irradiating a boundary portion between an outer circumferential surface of the proximal end portion 653a of the connection terminal 653 and the opposing surface 652b of the metal body 652 with the laser LB for laser welding to perform fillet-welding as illustrated in FIG. 11D. Through this metallurgical joining, a welding portion 651a, obtained by metal binding, is formed in the boundary portion between the outer circumferential surface of the proximal end portion 653a of the connection terminal 653 and the opposing surface 652b of the metal body 652, and the metal body 652 and the connection terminal 653 are electrically connected to each other. The welding portion 651a is continuously formed over the entire circumference along an opening edge of the round hole 652d of the metal body 652.

As described above, the metal body 652 and the connection terminal 653 are joined with each other using both the mechanical joining method and the metallurgical joining method in the negative electrode external terminal 651, and the mechanical joint has the press-fit structure, the metallurgical joint has the welding structure in which the metal body 652 and the connection terminal 653 are fillet-welded by the laser welding. Accordingly, the mechanical strength between the metal body 652 and the connection terminal 653 can be secured by the mechanical joining, and the electrical characteristics can be secured by the metallurgical joining. Therefore, it is possible to improve the reliability of the prismatic secondary battery 600A.

The welding structure obtained by fillet-welding the metal body 652 and the connection terminal 653 is provided in the present embodiment, and thus, it is possible to perform the welding using little welding energy with a small-scale production equipment and to suppress the manufacture cost to be low as compared to the lap-welding according to the above-described first to third embodiments. In addition, it is possible to visually confirm a welding state of the metal body 652 and the connection terminal 653, and thus, it is possible to easily perform the confirmatory test of the welding and to provide the high-quality product.

Further, the welding portion 651a is particularly provided on the opposing surface 652b side of the metal body 652 in the present embodiment, and thus, it is possible to use the welding surface 652a of the metal body 652 over the entire surface, to secure a wider joining area with the bus bar 1000, and to reduce the electrical resistance against the bus bar 1000.

### [Seventh Embodiment]

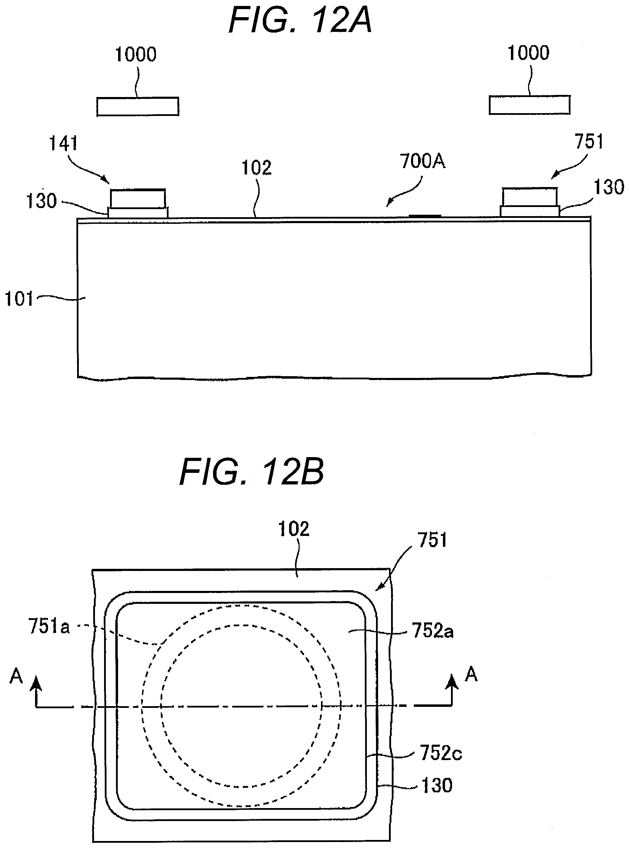

Next, a seventh embodiment of the present invention will be described with reference to FIGS. 12A to 12D, hereinafter.

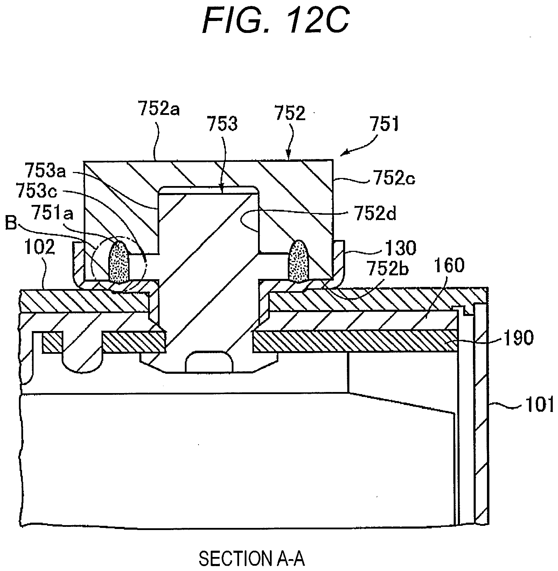

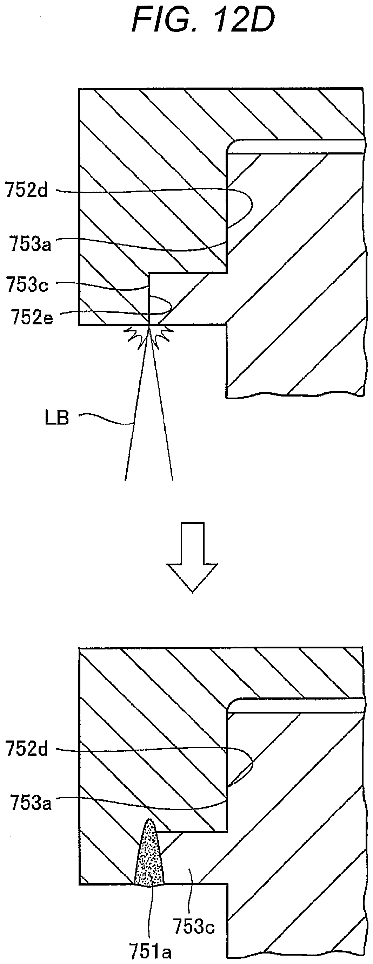

FIG. 12A is a front view illustrating a part of a prismatic secondary battery according to the seventh embodiment and the bus bar, FIG. 12B is a plan view illustrating the main part of a battery lid assembly according to the seventh embodiment, FIG. 12C is a cross-sectional view taken along a line A-A of FIG. 12B, and FIG. 12D is an enlarged view of a section B of FIG. 12C. Incidentally, a description will not be repeated regarding the configurations attached with the same reference signs and parts having the same functions as illustrated in FIGS. 1 to 6D which have been already described.

A characteristic point of the present embodiment is that a metallurgical joint is provided on an opposing surface side of a metal body and has a welding structure obtained by butt-welding. The present embodiment is a prismatic secondary battery in which external terminals of a positive electrode and a negative electrode are disposed on one surface of a prismatic battery container and a flat wound group is built in the battery container. One of the external terminals has a connection terminal, which passes through the battery container and is electrically connected to the flat wound group and a heterogeneous metal body which is joined with the connection terminal outside the battery container. Further, joints of the connection terminal and the metal body include the mechanical joint and a metallurgical joint, the mechanical joint has the press-fit structure, the metallurgical joint has a welding structure in which the connection terminal and the metal body are butt-welded by laser welding.

A negative electrode external terminal 751 of a prismatic secondary battery 700A includes a metal body 752 made of aluminum or an aluminum alloy and a connection terminal 753 made of copper or a copper alloy. The metal body 752 has a substantially rectangular flat block shape when seen in a plan view and has a lid-opposing surface 752b which opposes the battery lid 102 with the gasket 130 interposed therebetween, a welding surface 752a which is disposed in parallel to the battery lid 102 and welded with the bus bar 1000, and a side surface 752c which extends from a circumferential edge of the welding surface 752a to the circumferential edge of the lid-opposing surface 752b. Further, a round hole 752d is provided in a substantially central position of the lid-opposing surface 752b to have a predetermined depth toward the welding surface 752a. The connection terminal 753 has a round bar shape, and a proximal end portion 753a is press-fitted into the round hole 752d.

The round hole 752d has a stepped hole shape which includes a large diameter portion 752e having a diameter enlarged on the opposing surface 752b side. A flange portion 753c which is fitted to the large diameter portion 752e is provided in the connection terminal 753. An outer circumferential surface of the flange portion 753c opposes and abuts on an inner circumferential surface of the large diameter portion 752e of the round hole 752d, and an end surface of the flange portion 753c is flux with the opposing surface 752b of the metal body 752.

In the negative electrode external terminal 751, the connection terminal 753 and the metal body 752 are mechanically joined with each other by press-fitting the proximal end portion 753a of the connection terminal 753 into the round hole 752d of the metal body 752. Further, the connection terminal 753 and the metal body 752 are metallurgically joined with each other by irradiating a boundary portion between the outer circumferential surface of the flange portion 753c of the connection terminal 753 and the inner circumferential surface of the large diameter portion 752e of the metal body 752 with the laser LB for laser welding to perform butt-welding as illustrated in FIG. 12D. Through this metallurgical joining, a welding portion 751a, obtained by metal binding, is formed in the boundary portion between the outer circumferential surface of the flange portion 753c of the connection terminal 753 and the inner circumferential surface of the large diameter portion 752e of the metal body 752, and the metal body 752 and the connection terminal 753 are electrically connected to each other. The welding portion 751a is continuously formed over the entire circumference along the boundary portion between the outer circumferential surface of the flange portion 753c of the connection terminal 753 and the inner circumferential surface of the large diameter portion 752e of the metal body 752 like a circumference.

As described above, the metal body 752 and the connection terminal 753 are joined with each other using both the mechanical joining method and the metallurgical joining method in the negative electrode external terminal 751, and the mechanical joint has the press-fit structure, the metallurgical joint has the welding structure in which the metal body 752 and the connection terminal 753 are butt-welded by the laser welding. Accordingly, the mechanical strength between the metal body 752 and the connection terminal 753 can be secured by the mechanical joining, and the electrical characteristics can be secured by the metallurgical joining. Therefore, it is possible to improve the reliability of the prismatic secondary battery 700A.

The welding structure obtained by butt-welding the metal body 752 and the connection terminal 753 is provided in the present embodiment, and thus, it is possible to perform the welding using little welding energy with the small-scale production equipment and to suppress the manufacture cost to be low as compared to the lap-welding according to the above-described first to third embodiments. In addition, it is possible to emit the laser LB for laser welding in the vertical direction to the opposing surface 752b, and thus, the welding work is easier, and it is possible to manufacture the prismatic secondary battery in a simple manner as compared to the above-described sixth embodiment. In addition, it is possible to visually confirm a welding state of the metal body 752 and the connection terminal 753, and thus, it is possible to easily perform the confirmatory test of the welding and to provide the high-quality product.

Further, the welding portion 751a is particularly provided on the opposing surface 752b side of the metal body 752 in the present embodiment, and thus, it is possible to use the welding surface 752a of the metal body 752 over the entire surface, to secure the wider joining area with the bus bar 1000, and to reduce the electrical resistance against the bus bar 1000.

### [Eighth Embodiment]

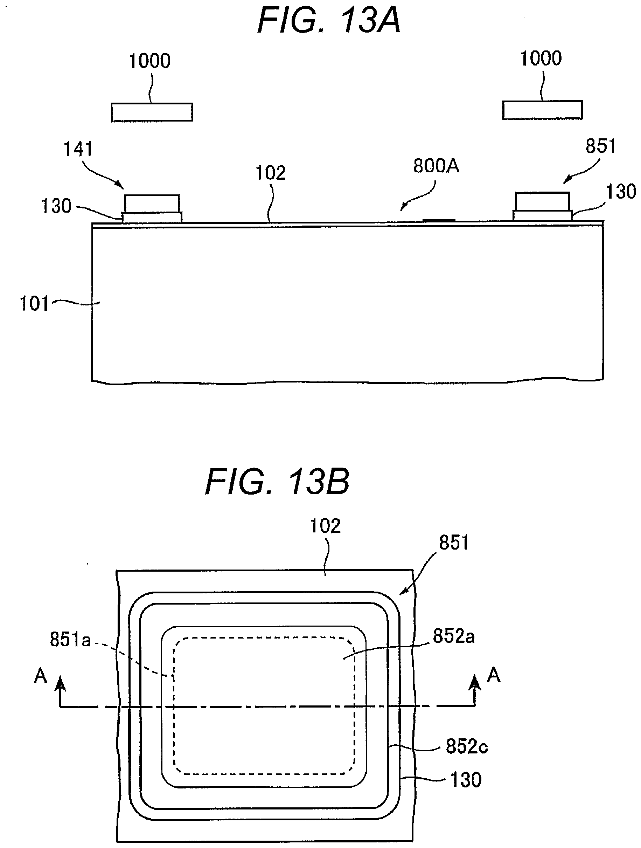

Next, an eighth embodiment of the present invention will be described with reference to FIGS. 13A to 13D, hereinafter.

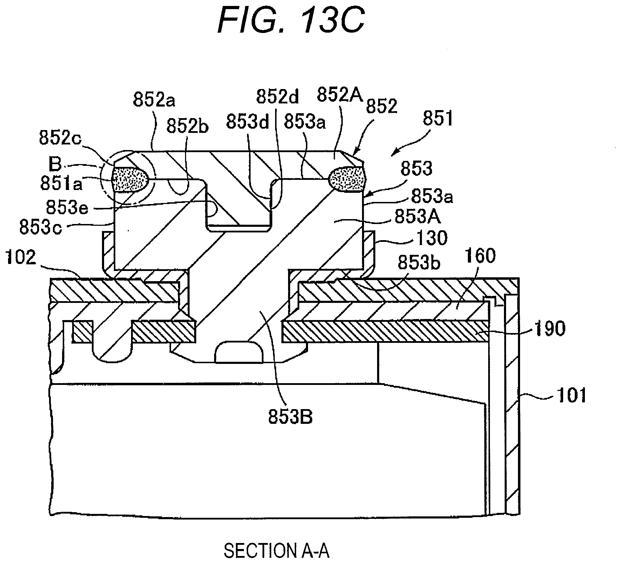

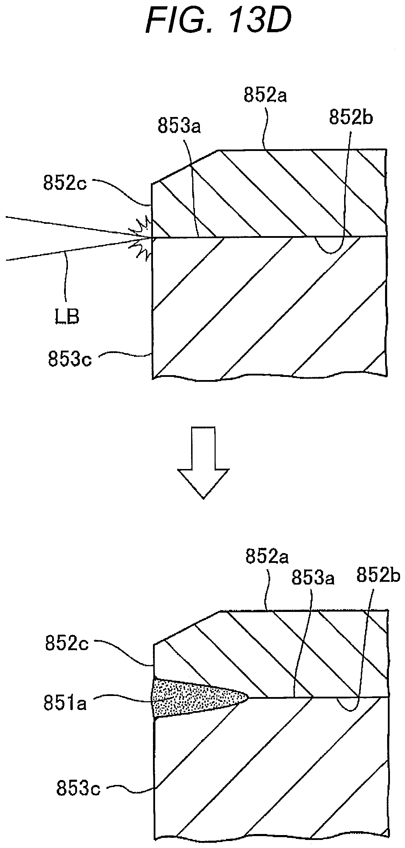

FIG. 13A is a front view illustrating a part of a prismatic secondary battery according to the eighth embodiment and the bus bar, FIG. 13B is a plan view illustrating the main part of a battery lid assembly according to the eighth embodiment, FIG. 13C is a cross-sectional view taken along a line A-A of FIG. 13B, and FIG. 13D is an enlarged view of a section B of FIG. 13C. Incidentally, a description will not be repeated regarding the configurations attached with the same reference signs and parts having the same functions as illustrated in FIGS. 1 to 6D which have been already described.

A characteristic point of the present embodiment is that a metallurgical joint is provided on a side surface of a metal body and has a welding structure obtained by butt-welding. The present embodiment is a prismatic secondary battery in which external terminals of a positive electrode and a negative electrode are disposed on one surface of a prismatic battery container and a flat wound group is built in the battery container. One of the external terminals has a connection terminal, which passes through the battery container and is electrically connected to the flat wound group and a heterogeneous metal body which is joined with the connection terminal outside the battery container. Further, joints of the connection terminal and the metal body include the mechanical joint and a metallurgical joint, the mechanical joint has the press-fit structure, the metallurgical joint has a welding structure in which the connection terminal and the metal body are butt-welded by laser welding.

A negative electrode external terminal 851 of a prismatic secondary battery 800A includes a metal body 852 made of aluminum or an aluminum alloy and a connection terminal 853 made of copper or a copper alloy. The metal body 852 includes a flat plate portion 852A which is disposed on the connection terminal 853 and has a substantially rectangular shape and a predetermined plate thickness when seen in a plan view. The flat plate portion 852A has a welding surface 852a which is disposed in parallel with the battery lid 102 and is welded with the bus bar 1000, an opposing surface 852b which opposes the connection terminal 853, a side surface 852c which extends between a circumferential edge of the welding surface 852a and a circumferential edge of the opposing surface 852b, and a shaft portion 852d which protrudes from the opposing surface 852b of the flat plate portion 852A. The shaft portion 852d has a fixed diameter, protrudes from a substantially central position of the opposing surface 852b by a predetermined length, and is press-fitted to a concave portion 853d of the connection terminal 853.

The connection terminal 853 has a proximal end portion 853A having a substantially rectangular block shape when seen in a plan view and a tip end portion 853B protruding from the proximal end portion 853A. The proximal end portion 853A has an abutment surface 853a which opposes and abuts on the opposing surface 852b of the flat plate portion 852A, a lid-opposing surface 853b which opposes the battery lid 102, and a side surface 853c which extends from a circumferential edge of the abutment surface 853a to a circumferential edge of the lid-opposing surface 853b. The tip end portion 853B protrudes from a substantially central position of the lid-opposing surface 853b and passes through the battery lid 102, and a tip end thereof is caulked to fix the connection terminal 853 to the battery lid 102. The concave portion 853d having a predetermined depth is provided in a substantially central position of the abutment surface 853a in the proximal end portion 853A of the connection terminal 853 into which the shaft portion 852d of the metal body 852 is press-fitted.

The metal body 852 and the connection terminal 853 have the same size when seen in a plan view, and are continuously flux with each other in a superimposition direction of the side surface 852c of the metal body 852 and the side surface 853c of the proximal end portion 853A of the connection terminal 853.

In the negative electrode external terminal 851, the connection terminal 853 and the metal body 852 are mechanically joined with each other by press-fitting the shaft portion 852d of the metal body 852 into the concave portion 853d of the connection terminal 853. Further, the connection terminal 853 and the metal body 852 are metallurgically joined with each other by irradiating a boundary portion between the side surface 853c of the connection terminal 853 and the side surface 852c of the metal body 852 with the laser LB for laser welding to perform butt-welding as illustrated in FIG. 13D. Through this metallurgical joining, a welding portion 851a, obtained by metal binding, is formed in the boundary portion between the side surface 853c of the connection terminal 853 and the side surface 852c of the metal body 852, and the metal body 852 and the connection terminal 853 are electrically connected to each other. The welding portion 851a is continuously formed over the entire circumference along the boundary portion between the side surface 853c of the connection terminal 853 and the side surface 852c of the metal body 852 like a circumference.

As described above, the metal body 852 and the connection terminal 853 are joined with each other using both the mechanical joining method and the metallurgical joining method in the negative electrode external terminal 851, and the mechanical joint has the press-fit structure, the metallurgical joint has the welding structure in which the metal body 852 and the connection terminal 853 are butt-welded by the laser welding. Accordingly, the mechanical strength between the metal body 852 and the connection terminal 853 can be secured by the mechanical joining, and the electrical characteristics can be secured by the metallurgical joining. Therefore, it is possible to improve the reliability of the prismatic secondary battery 800A.

The welding structure obtained by butt-welding the metal body 852 and the connection terminal 853 is provided in the present embodiment, and thus, it is possible to perform the welding using little welding energy with the small-scale production equipment and to suppress the manufacture cost to be low as compared to the lap-welding according to the above-described first to third embodiments. In addition, it is possible to emit the laser LB for laser welding in the vertical direction to the side surfaces 852c and 853c, and thus, the welding work is easier, and it is possible to manufacture the prismatic secondary battery in a simple manner as compared to the fillet-welding. In addition, it is possible to visually confirm a welding state of the metal body 852 and the connection terminal 853, and thus, it is possible to easily perform the confirmatory test of the welding and to provide the high-quality product.

Further, the welding portion 851a is particularly provided on the side surfaces 852c and 853c of the metal body 852 and the connection terminal 853 in the present embodiment, and thus, it is possible to use the welding surface 852a of the metal body 852 over the entire surface, to secure the wider joining area with the bus bar 1000, and to reduce the electrical resistance against the bus bar 1000.

In addition, since the welding portion 851a is continuously provided over the entire circumference along the side surfaces 852c and 853c of the metal body 852 and the connection terminal 853 like the circumference, it is possible to secure the wider joining area through the welding and to further reduce the electrical resistance between the metal body 852 and the connection terminal 853.

### [Ninth Embodiment]

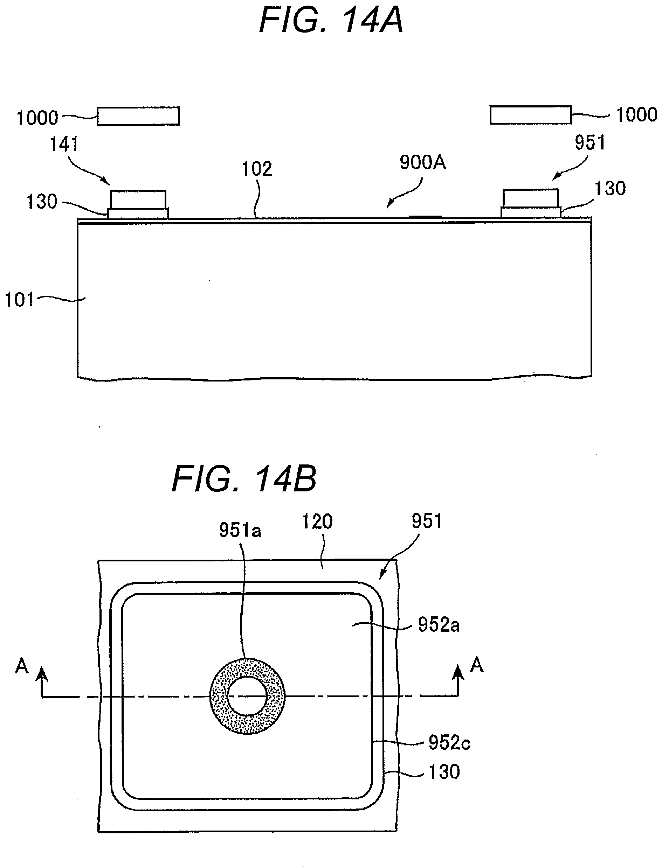

Next, a ninth embodiment of the present invention will be described with reference to FIGS. 14A to 14D, hereinafter.

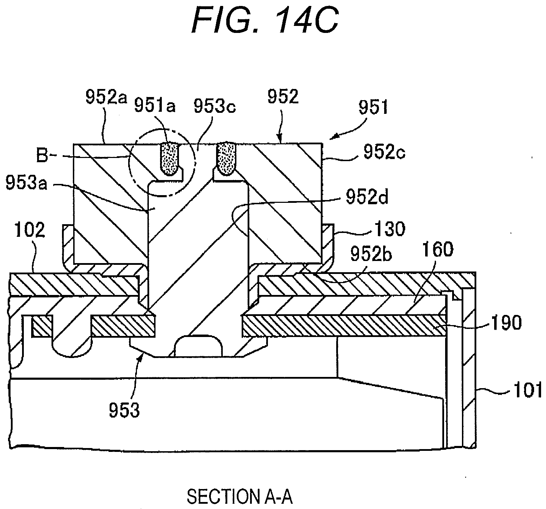

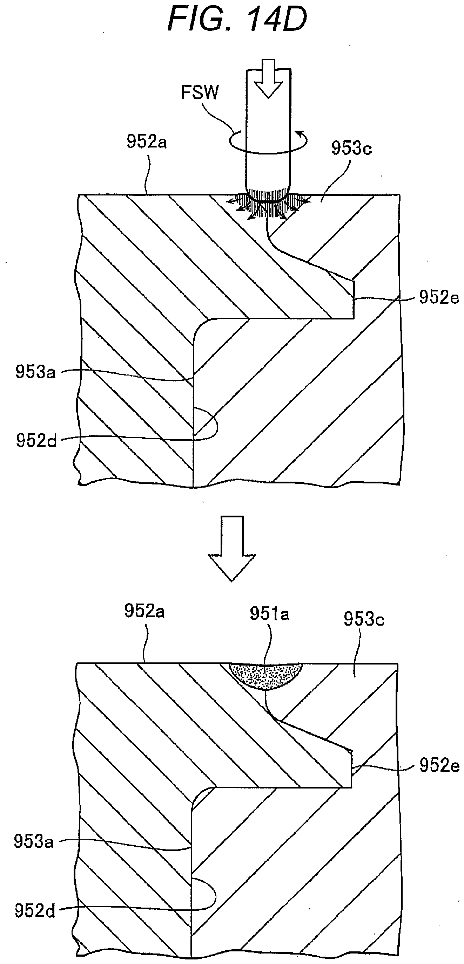

FIG. 14A is a front view illustrating a part of a prismatic secondary battery according to the ninth embodiment and the bus bar, FIG. 14B is a plan view illustrating the main part of a battery lid assembly according to the ninth embodiment, FIG. 14C is a cross-sectional view taken along a line A-A of FIG. 14B, and FIG. 14D is an enlarged view of a section B of FIG. 14C. Incidentally, a description will not be repeated regarding the configurations attached with the same reference signs and parts having the same functions as illustrated in FIGS. 1 to 6D which have been already described.

A characteristic point of the present embodiment is that a mechanical joint has a caulking structure and a metallurgical joint has a structure using friction stir welding. The present embodiment is a prismatic secondary battery in which external terminals of a positive electrode and a negative electrode are disposed on one surface of a prismatic battery container and a flat wound group is built in the battery container. One of the external terminals has a connection terminal, which passes through the battery container and is electrically connected to the flat wound group and a heterogeneous metal body which is joined with the connection terminal outside the battery container. Further, joints of the connection terminal and the metal body include the mechanical joint and the metallurgical joint, the mechanical joint has the caulking structure, the metallurgical joint has the structure in which the connection terminal and the metal body are joined with each other by the friction stir welding (FSW).

A negative electrode external terminal 951 of a prismatic secondary battery 900A includes a metal body 952 made of aluminum or an aluminum alloy and a connection terminal 953 made of copper or a copper alloy. The metal body 952 has a substantially rectangular flat block shape when seen in a plan view and has a lid-opposing surface 952b which opposes the battery lid 102 with the gasket 130 interposed therebetween, a welding surface 952a which is disposed in parallel to the battery lid 102 and welded with the bus bar 1000, and a side surface 952c which extends from a circumferential edge of the welding surface 952a to the circumferential edge of the lid-opposing surface 952b. Further, a round hole 952d is provided in a substantially central position of the lid-opposing surface 952b to have a predetermined depth toward the welding surface 952a. The connection terminal 953 has a round bar shape, and a proximal end portion 953a is inserted into the round hole 952d.

The welding surface 952a is provided with a through-hole 952e which passes through the round hole 952d to a bottom surface thereof. A hole diameter of the through-hole 952e on the round hole 952d side is throttled to be smaller than that on the welding surface 952a side.

A caulking portion 953b is provided in the proximal end portion 953a of the connection terminal 953. The caulking portion 953b is inserted through the through-hole 952e and folded and caulked in the outer circumferential direction, thereby caulking and fixing the metal body 952. In the state of being caulked and fixed, an outer circumferential surface of the caulking portion 953b opposes and abuts on the inner circumferential surface of the through-hole 952e, and an end surface of the caulking portion 953b is flux with the welding surface 952a. Thereafter, a boundary portion between the outer circumferential surface of the caulking portion 953b of the connection terminal 953 and the inner circumferential surface of the through-hole 952e of the metal body 952 is joined from the welding surface 952 side by the friction stir welding (FSW).

In the negative electrode external terminal 951, the connection terminal 953 and the metal body 952 are mechanically joined with each other by inserting the caulking portion 953b of the connection terminal 953 through the through-hole 952e of the metal body 952 to perform the caulking. Further, the connection terminal 953 and the metal body 952 are metallurgically joined with each other by performing the friction stir welding of the boundary portion between the outer circumferential surface of the caulking portion 953b of the connection terminal and the inner circumferential surface of the through-hole 952e of the metal body 952 from the welding surface 952 side as illustrated in FIG. 14D.

Through this metallurgical joining, a joint 951a, obtained by the friction stir welding, is formed in the boundary portion between the outer circumferential surface of the caulking portion 953b of the connection terminal 953 and the inner circumferential surface of the through-hole 952e of the metal body 952, and the metal body 952 and the connection terminal 953 are electrically connected to each other. The joint 951a is continuously formed over the entire circumference along the boundary portion between the outer circumferential surface of the caulking portion 953b of the connection terminal 953 and the inner circumferential surface of the through-hole 952e of the metal body 952 like a circumference.

As described above, the metal body 952 and the connection terminal 953 are joined with each other using both the mechanical joining method and the metallurgical joining method in the negative electrode external terminal 951, and the mechanical joint has the caulking structure, the metallurgical joint has the metal binding structure in which the metal body 952 and the connection terminal 953 are metallically bound by the friction stir welding. Accordingly, the mechanical strength between the metal body 952 and the connection terminal 953 can be secured by the mechanical joining, and the electrical characteristics can be secured by the metallurgical joining. Therefore, it is possible to improve the reliability of the prismatic secondary battery 900A.

In particular, the metal binding structure obtained by metallically binding the metal body 952 and the connection terminal 953 using the friction stir welding is provided in the present embodiment, and thus, it is possible to decrease heat at the time of manufacture as compared to the above-described welding structure using the laser welding. Therefore, it is possible to manufacture the prismatic secondary battery with less energy and the small-scale production equipment and to suppress the manufacture cost to be low. In addition, it is possible to manufacture the prismatic secondary battery in a simple manner as compared to the work which is performed in the other embodiments described above. In addition, it is possible to visually confirm a welding state of the metal body 552 and the connection terminal 553, and thus, it is possible to easily perform the confirmatory test of the binding and to provide the high-quality product.

Incidentally, the proximal end portion 953a of the connection terminal 953 have the structure of being inserted in the round hole 952d in the exemplified case of the present embodiment, but may have the press-fit structure like the other embodiments. In this case, the mechanical joint has both the caulking structure and the press-fit structure so that it is possible to obtain the stronger mechanical strength.

As above, the embodiments of the present invention have been described in detail, but the present invention is not limited to the above-described embodiments, and various design modifications can be made without departing from the spirit of the present invention recited in the claims. For example, the above-described embodiments have been described in detail in order to describe the present invention in an easily understandable manner, and are not necessarily limited to one including the entire configuration that has been described above. In addition, some configurations of a certain embodiment can be substituted by configurations of another embodiment, and further, a configuration of another embodiment can be added to a configuration of a certain embodiment. Further, deletion or substitution of other configurations can be made with respect to some configurations of each embodiment.

### Reference Signs List

100A to 900A prismatic secondary battery
101 battery can (battery container)
102 battery lid (battery container)
141 positive electrode external terminal
151 negative electrode external terminal
151a welding portion
152 metal body
153 connection terminal
171 flat wound group

## Claims

1. A prismatic secondary battery in which external terminals of a positive electrode and a negative electrode are disposed on one surface of a prismatic battery container and a flat wound group is housed in the battery container, wherein
one of the external terminals has a connection terminal, which passes through the battery container and is electrically connected to the flat wound group, and a metal body which is joined with the connection terminal, and joints between the connection terminal and the metal body include a mechanical joint and a metallurgical joint.

2. The prismatic secondary battery according to claim 1, wherein the mechanical joint has at least any one of a screw structure, a press-fit structure, and a caulking structure.

3. The prismatic secondary battery according to claim 2, wherein the metallurgical joint has a welding structure obtained by any one of lap-welding, fillet-welding, and butt-welding.

4. The prismatic secondary battery according to claim 3, wherein the metal body includes an opposing surface which opposes the battery container, a bus bar welding surface which is disposed to be spaced apart from the opposing surface, and a side surface which extends between a circumferential edge of the opposing surface and a circumferential edge of the bus bar welding surface, and
the metallurgical joint is provided on at any one of the bus bar welding surface, the opposing surface, and the side surface of the metal body.

5. The prismatic secondary battery according to claim 3, wherein the metallurgical joint includes a plurality of welding portions when having the welding structure obtained by the lap-welding.

6. The prismatic secondary battery according to claim 5, wherein the metal body includes a round hole which is opened in the opposing surface and into which a proximal end portion of the connection terminal is inserted and a through-hole which passes through a portion between a bottom surface of the round hole and the bus bar welding surface.

7. The prismatic secondary battery according to claim 2, wherein the metallurgical joint has a joint structure obtained by friction stir welding.

8. The prismatic secondary battery according to claim 1, wherein a gap between the metal body and the connection terminal is filled with filler.
